# EUROPEAN PATENT SPECIFICATION

(11) **EP 3 708 633 B1**
(45) Date of publication and mention of the grant of the patent: **19.03.2025**
(21) Application number: 20172655.1
(22) Date of filing: 27.08.2015
(51) Int. Cl.: C09K 8/528

(54) **METHOD FOR RECOVERY OF CRUDE OIL**
METHODE ZUR ERDÖLGEWINNUNG
METHODE D'OBTENTION DE NAPHTE

(30) Priority: 18.08.2015 US 201562206658 P; 18.08.2015 US 201562206669 P
(43) Date of publication of application: 16.09.2020
(62) Divisional of application: 15836029.7
(73) Proprietor: Ecolab USA Inc., St. Paul, MN 55102 (US)
(72) Inventor: SOMMESE, Anthony G., Wheaton, IL Illinois 60564 (US); GILL, Jasbir S., Naperville, IL Illinois 60564 (US); MILLER, Thomas M., Aurora, IL Illinois 60506 (US); RODMAN, David, Townsville, Queensland 4810 (AU); BATTON, Carol B., Saint Paul, MN 55102 (US); HOOTS, John E., Saint Paul, MN 55102 (US); WEBERSKI, Michael Patrick Jr., Sugar Grove, IL Illinois 60554 (US); GODFREY, Martin Ray, Eagan, MN Minnesota 55122 (US)
(74) Representative: Godemeyer Blum Lenze Patentanwälte Partnerschaft mbB - werkpatent

(56) References cited:
- WO-A1-2009/061487
- WO-A1-2015/069261
- WO-A1-2015/088587
- US-A1- 2009 139 723

## Description

### FIELD OF THE INVENTION

The present invention generally relates to methods for inhibiting and/or removing deposits, reducing the pH of an aqueous fluid, and increasing production of oil from a subterranean formation the methods comprising contacting a composition with a surface in contact with a liquid, wherein the composition comprises a salt of a nitrogen base having a fluoro-inorganic anion. In particular, these methods for removing deposits and lowering the pH can be used in steam generators, evaporators, heat exchangers, and the like that use water compositions containing produced water and other water sources in plant unit operations.

### BACKGROUND OF THE INVENTION

Within the petroleum industry, acids perform many functions, i.e., removing inorganic and organic scales, decarbonation, pH adjustment, general cleaning, and disinfecting; however, these acids can be highly dangerous to handle and transport, highly corrosive to metal surfaces, and can lead to the formation of mineral scales.

Traditionally, mineral acids such as hydrochloric acid or inhibited hydrochloric acid are used to acidify or neutralize high alkaline water systems. The use of mineral acids can cause corrosion issues of the pipelines and other equipment. Mineral acids also cause metal loss during cleaning of aqueous systems fouled with deposits and scales in systems contacting the aqueous mixture; the system can be a heat exchangers, cooling or heating system, a pipeline, a water distribution system, or an oil and geothermal well. Some of the waters that may have very high alkalinity must be neutralized prior to their use in order to prevent deposition. Such waters neutralized with mineral acids will subsequently become very corrosive and cause metal loss due the presence counter ions of the neutralizing mineral acid.

Silicate-based deposits can occur in many industrial systems. For example, silicate-based deposits are a problem in some boilers, evaporators, heat exchangers and cooling coils. The presence of silica/silicate deposits can significantly reduce system thermal efficiency and productivity, increase operating/maintenance costs, and in some cases lead to equipment failure. Steam generators and evaporators are especially prone to silicate deposits due to operation at elevated temperatures, pH, and increased cycles of concentration (COC).

Chemical treatment programs can be used to minimize deposits, but all the system described above can become fouled over time and cleaning is in order. Options for cleaning are chemical in-situ programs or mechanical.

When crude oil production declines, there are a number of causes for the decline in production. Two reasons for a decline in oil production are (1) a reduction in the permeability of the oil "reservoir" or (2) the invasion of this reservoir by the water contained in a lower layer.

A reduction in permeability is typically due to the entrainment of fines, by the flow of the oil, towards the production well. Around this well, these particles accumulate and gradually plug the natural pores in the rock. The oil can then no longer flow out at an efficient rate through this well. These particles can be of various origins (e.g., type of rock, damage to the formation, progressive deterioration of the rock, etc.).

In order to remove these particles and improve the mobility of the oil in the formation, an acidic fluid can be injected into the well where some of the particles and some of the rock in the formation are partially soluble in this acidic fluid. Thus, this well stimulation method can cause these particles and rock to partially dissolve, and make the rock of the formation more porous thereby increasing the mobility of the oil in the formation and increasing well production.

Thus a need exits to develop safe acids to perform many functions within the petroleum industry, i.e., removing inorganic and organic scales, decarbonation, pH adjustment, general cleaning, and disinfecting, that are safer to handle and transport than conventional acids. WO2015/069261 discloses a method for introducing a treatment fluid into a subterranean formation being such as shale, sandstone or limestone, the treatment fluid comprising a base fluid, an acid and an amine monofluorophosphate or bisamine monofluorophosphate. The amine has either unsaturated alkyl group comprising 8-24 carbons or an unsaturated alkenyl group comprising 8-24 carbons. Further, the treatment fluid comprises a corrosion inhibitor, a chelating agent and a surfactant.

### SUMMARY OF THE INVENTION

The aspect of the invention is a method for increasing recovery of crude oil from a subterranean hydrocarbon-containing formation, the method comprising injecting an acid composition comprising a salt of a nitrogen base having a fluoro-inorganic anion into a well which is in contact with the subterranean hydrocarbon-containing formation, wherein the nitrogen base is urea.

### BRIEF DESCRIPTION OF THE DRAWINGS

Figure 1 is a graph of NCM average vs. pH of various compositions A, D, and F with inhibited I.
Figure 2 is a schematic of an evaporator system based on MVC operation.
Figure 3 is a schematic of the dynamic laboratory test apparatus.
Figure 4 is a schematic of a pilot scale boiler (PSB) system.
Figures 5A and 5B are pictures of a fouled distributor cap and the same distributor cap cleaned with the cleaning composition, respectively.
Figure 6 is a graph of the % dissolution of a deposit versus the cleaning composition concentration in v/v% tested in a laboratory scale experiment described in Example 18.
Figure 7 is a graph of the amount of silica and calcium deposit removed in mg/L versus the elapsed time of the cleaning process with the cleaning composition in hours tested in a laboratory scale experiment described in Example 18.
Figure 8 is a graph of the amount of silica, calcium, and aluminum deposit removed in mg/L versus the elapsed time of the cleaning process with the cleaning composition in hours tested in a laboratory scale experiment described in Example 18.
Figure 9 is a graph of silica concentration (in mg/L) removed versus time using a cleaning composition where the silica concentration is volume corrected and uncorrected for addition of fluid to the system tested in a field experiment described in Example 22.
Figure 10 is a graph of aluminum concentration (in mg/L) removed versus time using a cleaning composition where the aluminum concentration is volume corrected tested in a field experiment described in Example 22.
Figure 11 is a graph of calcium concentration (in mg/L) removed versus time using a cleaning composition where the calcium concentration is volume corrected tested in a field experiment described in Example 22.
Figure 12 is a graph of magnesium concentration (in mg/L) removed versus time using a cleaning composition where the magnesium concentration is volume corrected tested in a field experiment described in Example 22.
Figure 13 is a graph of the corrosion rate (in average mpy) versus time using a cleaning composition tested in a field experiment described in Example 22.

Corresponding reference characters indicate corresponding parts throughout the drawings.

### DESCRIPTION OF THE PREFERRED EMBODIMENTS

The aspect of the present invention is directed towards methods for increasing recovery crude oil from a subterranean hydrocarbon-containing formation and for removing or inhibiting deposits in wells used for the production of oil and geothermal fluids. These methods use an acid composition comprising a salt of a nitrogen base having a fluoro-inorganic anion, whereby the nitrogen base comprises urea. This acid composition is advantageous because it is capable of dissolving a variety of inorganic and organic deposits, is capable of reducing the pH in an aqueous environment, and is easier to handle than conventional acid compositions.

This method for removing heavy crude oils trapped in carbonate fields by injecting an acid composition generates carbon dioxide that helps lift the oil through the well. This treatment can also rejuvenate geothermal production and injection wells by contacting the well with an acid composition comprising a salt of a nitrogen base having a fluoro-inorganic anion that removes various deposits and increases steam and electricity production.

Additionally, in sandstone formations, the methods described herein can restore or improve the natural formation permeability around the wellbore by removing formation damage, by dissolving material plugging the pores or by enlarging the pore spaces. Traditionally, this method involves using a solution generally composed of hydrochloric acid preflush, a main treating fluid (mixture of HCl and HF) and an overflush (weak acid solution or brine). The treating fluid is maintained under pressure inside the reservoir for a period of time, after which the well is swabbed and returned to production. Using the composition in this invention, the use of HCl and HF have been eliminated which are known corrosive acids.

Further, in carbonate formations, the methods described herein can create new, highly conductive channels (wormholes) that bypass damage.

These methods can be used for water flooding of carbonate fields. During this process, the formations yield water that is high in carbonate ions, which can interact with scaling cations such as calcium, magnesium, strontium, and barium to form thick scales. Treating the produced water with an acid can form carbon dioxide and limit the scale formation. However, conventionally used acids are corrosive in nature and could cause corrosion problems in downstream unit operations. The methods disclosed herein can be used to liberate carbon dioxide without the corrosive side effect to downstream processing operations that conventional acids may exhibit.

The compositions can be provided in conjunction with a fluid or an aqueous medium and can be provided in a ready-to-use form or can be provided as separate agents and the composition can be prepared at the site of the treatment. Depending on the nature of use and application, the composition can be in a form of a concentrate containing a higher proportion the salt of nitrogen base having a fluoro-inorganic anion, the concentrate being diluted with water or another solvent or liquid medium or other components such as the antifoaming agent, organic inhibitor of silica or silicate deposits, corrosion inhibitor, or surfactant before or during use. Such concentrates can be formulated to withstand storage for prolonged periods and then diluted with water in order to form preparations which remain homogeneous for a sufficient time to enable them to be applied by conventional methods. After dilution, such preparations may contain varying amounts of the acid composition or cleaning composition, depending upon the intended purpose or end-use application.

The acid composition or cleaning composition can comprise a salt of a nitrogen base having a fluoro-inorganic anion.

The fluoro-inorganic anion can comprise a borate ion, a phosphate ion, or a combination thereof. Preferably, the fluoro-inorganic anion comprises a borate ion.

The fluoro-inorganic anion can comprise tetrafluoroborate, hexafluorophosphate, or a combination thereof. Additionally, a hydrolysis product of tetrafluoroborate and hexafluorophosphate comprising fluorine atoms can also be used.

Preferably, the fluoro-inorganic anion of the acid composition or the cleaning composition comprises tetrafluoroborate.

The acid composition or cleaning composition can further comprise water.

The acid composition or cleaning composition can have the fluoro-inorganic anion comprise tetrafluoroborate and the nitrogen base comprise urea and the molar ratio of urea to tetrafluoroboric acid used to prepare the salt is 1:3 to 5:1, preferably 1:2 to 3:1. The nitrogen base (e.g., urea) can react with the fluoro-inorganic acid (e.g., fluoroboric acid) to form the salt of a nitrogen base having a fluoro-inorganic anion (e.g., urea tetrafluoroborate). However, the relative amounts and/or concentrations of the fluoro-inorganic acid component and base component in the compositions of the present invention can vary widely, depending on the desired function of the composition and/or the required cleaning activity. As such, the weight ratios and/or concentrations utilized can be selected to achieve a composition and/or system having the desired cleaning and health and safety characteristics.

The nitrogen base comprise urea.

The salt of a nitrogen base having a fluoro-inorganic anion is disclosed in U.S. Patent Nos. 8,389,453 and 8,796,195 and available commercially from Nalco-Champion as Product No. EC6697A.

The methods for increasing recovery of crude oil from a subterranean hydrocarbon-containing formation described herein can have the acid composition be diverted toward a zone of the subterranean hydrocarbon-containing formation that has a lower permeability to fluid than an adjacent zone.

The subterranean hydrocarbon-containing formation can comprise a sandstone reservoir or a carbonate reservoir.

The subterranean hydrocarbon-containing formation can comprise a carbonate reservoir.

The methods described herein can be used in a well that is an oil well, a geothermal well, a disposal well, and a reinjection well.

The internal surface in contact with the acid composition or cleaning composition can be an internal surface of a piece of equipment. This piece of equipment could be a steam generator, an evaporator, a heat exchanger, a cooling coil, a tank, a sump, a containment vessel, a pump, a distributor plate, or a tube bundle.

The piece of equipment whose internal surface is cleaned in the method described herein could also be a pipe, a drain line, or a fluid transfer line.

Preferably, the piece of equipment cleaned using the methods described herein is an evaporator or a steam generator.

The evaporator or steam generator can be used in a geothermal surface system, a thermal recovery system, a sugar production system, or an ethanol production system.

The thermal recovery system can be a steam-assisted gravity drainage system, a steam flood system, or a cyclic steam stimulation system.

When the acid composition is used in a sugar production system, the acid composition inhibits or removes deposits including oxalate, silica, phosphate, or carbonate deposits.

When the acid composition is used in a geothermal surface system, the acid composition inhibits or removes deposits including silica, carbonate, or sulfide deposits.

The acid composition or cleaning composition can be used in addition to a pigging process. The pigging process can be used in a tube bundle, a pipe, a drain line, or a fluid transfer line where deposits have formed and partially blocked the flow of the fluid through the line. The pigging process comprises placing a device (i.e., pig) that is approximately the same diameter as the inner diameter of the line or tube to be pigged and propelling the pig through the line or tube, usually by applying pressure behind the pig. The acid composition or cleaning composition would aid in the pigging process by removing or softening the deposits formed in the lines whereby less pressure is needed to propel the pig through the line or tube and removal of the deposits is increased.

The aqueous system can be a produced water, a surface water, a ground water, a feedwater, or a combination thereof.

The aqueous system can have a basic pH (i.e., a pH > 7).

The acid composition or cleaning composition can reduce corrosion of the internal surface of the piece of equipment as compared to the same method using a conventional acid composition (e.g., hydrochloric acid, hydrofluoric acid, sulfuric acid, etc.).

The acid composition or cleaning composition can reduce metal loss from the internal surface of the piece of equipment as compared to the same method using a conventional acid composition (e.g., hydrochloric acid, hydrofluoric acid, sulfuric acid, etc.).

The acid composition or cleaning composition can further comprise a surfactant. Preferably, the surfactant is a nonionic surfactant.

The acid composition or cleaning composition can further comprise sodium chlorite/chlorate, and an additional acid. This acid composition can disinfect the aqueous system.

The acid composition or cleaning composition can further comprise a corrosion inhibitor.

The acid composition or cleaning composition can further comprise a chelating agent.

The chelating agent can be ethylene diamine tetraacetic acid (EDTA), 1-hydroxyethane 1,1-diphosponic acid (HEDP), a gluconate, or a combination thereof.

The methods for removing an inorganic or organic deposit in a well can remove deposits of a metal oxalate, a metal carbonate, a silicate, a metal sulfate, or a combination thereof.

The concentration of the acid used for injection can be from about 5 wt.% to about 30 wt.% based on the total weight of the acid composition.

The concentration of the neat acid composition can be from about 5 wt.% to about 85 wt.%.

For removing deposits in wells, the concentration of the acid composition in the injection mixture can be from about 5 wt.% to about 30 wt.%. Preferably, the concentration of the acid composition is about 15 wt.% based on the total weight of the carrier fluid (e.g., aqueous mixture) that is being flushed into a well. After 24 to 36 hours of contact of the aqueous mixture with the well and formation, the mixture is then pumped out of the well or formation.

The method for cleaning the surface in contact with a liquid containing silica or silicates can be performed at a temperature from about 0 °C to about 374 °C, from about 20 °C to about 320 °C, or from about 40 °C to about 100 °C.

In particular, the application of the composition can be in the cleaning and rejuvenation of wells which are used for the production of oil and geothermal fluids and reinjection of brine and general disposal wells.

The injected fluid can be, for example, water, brine (salt water), hydraulic fracture stimulation fluid (i.e. fracking fluid), acidizing additives, or any other type of aqueous fluid.

The acid composition can be injected into the formation during almost any stage in the life of the well, such as during drilling, completion, or stimulation. The acid compositions are used in well stimulations methods to help increase permeability and improve production.

Additional additives typically used in hydraulic fracturing or used post-primary fracturing can be injected into the well, such as a viscosifying agent, a solvent, an alkali, a flow back aid, a non-emulsifier, a friction reducer, a breaker, a crosslinking agent, a biocide, or a proppant (e.g., sand). These additives typically are less than 1% of the fracturing fluid volume.

The injection step of the methods of the invention can occur after hydraulic fracturing of the well.

The injection step of the methods of the invention can occur during hydraulic fracturing of the well.

The antifoaming agent of the cleaning composition can comprise a nonionic silicone (available commercially from Nalco, Inc. as Product No. 336FG), an ethoxylated, propoxylated C₁₄-C₁₈ alcohol (available commercially from Nalco, Inc. as Product No. 00PG-007), nonionic alkoxylated C₆-C₁₀ alcohol comprising both ethoxy and propoxy groups (available commercially from Nalco, Inc. as Product No. R-50360), nonionic propylene glycol, ethylene glycol block copolymer (available commercially from Nalco, Inc. as Product No. PP10-3038), an ethoxylated C₁₁-C₁₄ alcohol (available commercially from Nalco, Inc. as Product No.PP10-3148), a propylene oxide glycol polymer (available commercially from Nalco, Inc. as Product No. 7906), a C₁₆-C₁₈ alcohol (available commercially from Nalco, Inc. as Product No.7465), or a combination thereof.

Preferably, the antifoaming agent of the cleaning composition comprises a nonionic silicone commercially available from Nalco, Inc. as Product No. 336FG.

The antifoaming agent can be present in the cleaning composition at a concentration of from about 1 mg/L to about 50,000 mg/L, from about 1 mg/L to about 40,000 mg/L, from about 1 mg/L to about 30,000 mg/L, from about 1 mg/L to about 20,000 mg/L, from about 1 mg/L to about 10,000 mg/L, from about 5 mg/L to about 10,000 mg/L, from about 5 mg/L to about 5,000 mg/L, from about 5 mg/L to about 1,000 mg/L, from about 5 mg/L to about 500 mg/L, from about 5 mg/L to about 300 mg/L, from about 5 mg/L to about 200 mg/L, from about 10 mg/L to about 10,000 mg/L, from about 10 mg/L to about 5,000 mg/L, from about 10 mg/L to about 1,000 mg/L, from about 10 mg/L to about 500 mg/L, from about 10 mg/L to about 300 mg/L, from about 10 mg/L to about 200 mg/L, from about 50 mg/L to about 5,000 mg/L, from about 50 mg/L to about 1,000 mg/L, from about 50 mg/L to about 500 mg/L, from about 50 mg/L to about 250 mg/L or from about 50 mg/L to about 150 mg/L.

The antifoaming agent is effective at the low pH and very high conductivity of the cleaning compositions, as well as in cleaning solutions containing hardness ions, silica, organics, or heavy metals (e.g., iron) removed from fouled surfaces.

The acid composition or cleaning composition can also include a corrosion inhibitor. The corrosion inhibitor employed in the present invention can be any one or more corrosion inhibitors known to those skilled in the art and/or specifically dictated by several factors including, but not limited to, the type of surface to be treated (metals, such as, aluminum, steel, iron, brass, copper, ceramics, plastics, glass etc.), the tetrafluoroboric acid concentrations thereof included in the system, system pH, the inhibitor efficiency, inhibitor solubility characteristics, desired length of exposure of the system to the surface, environmental factors, etc. Accordingly, such a corrosion inhibitor can be a sulfonate, a carboxylate, an amine, an amide, a borated-based inhibitor compound, or a combination thereof.

Preferably, the corrosion inhibitor is an imidazoline, a quaternary amine, a fatty acid, a phosphate ester, a carboxylic acid, an amine, a phosphate, a polyphosphate, a heavy metal, or a combination thereof.

Suitable corrosion inhibitors for inclusion in the compositions include, but are not limited to, alkyl, hydroxyalkyl, alkylaryl, arylalkyl or arylamine quaternary salts; mono or polycyclic aromatic amine salts; imidazoline derivatives; mono-, di-or trialkyl or alkylaryl phosphate esters; phosphate esters of hydroxylamines; phosphate esters of polyols; and monomeric or oligomeric fatty acids.

Suitable alkyl, hydroxyalkyl, alkylaryl arylalkyl or arylamine quaternary salts include those alkylaryl, arylalkyl and arylamine quaternary salts of the formula [N⁺R^{5a}R^{6a}R^{7a}R^{8a}][X⁻] wherein R^{5a}, R^{6a}, R^{7a}, and R^{8a} contain one to 18 carbon atoms, and X is Cl, Br or I. In certain embodiments, R^{5a}, R^{6a}, R^{7a}, and R^{8a} are each independently selected from the group consisting of alkyl (e.g., C₁-C₁₈ alkyl), hydroxyalkyl (e.g., C₁-C₁₈ hydroxyalkyl), and arylalkyl (e.g., benzyl). The mono or polycyclic aromatic amine salt with an alkyl or alkylaryl halide include salts of the formula [N⁺R^{5a}R^{6a}R^{7a}R^{8a}][X⁻] wherein R^{5a}, R^{6a}, R^{7a}, and R^{8a} contain one to 18 carbon atoms, and X is Cl, Br or I.

Suitable quaternary ammonium salts include, but are not limited to, tetramethyl ammonium chloride, tetraethyl ammonium chloride, tetrapropyl ammonium chloride, tetrabutyl ammonium chloride, tetrahexyl ammonium chloride, tetraoctyl ammonium chloride, benzyltrimethyl ammonium chloride, benzyltriethyl ammonium chloride, phenyltrimethyl ammonium chloride, phenyltriethyl ammonium chloride, cetyl benzyldimethyl ammonium chloride, hexadecyl trimethyl ammonium chloride, dimethyl alkyl benzyl quaternary ammonium compounds, monomethyl dialkyl benzyl quaternary ammonium compounds, trimethyl benzyl quaternary ammonium compounds, and trialkyl benzyl quaternary ammonium compounds, wherein the alkyl group can contain between about 6 and about 24 carbon atoms, about 10 and about 18 carbon atoms, or about 12 to about 16 carbon atoms. Suitable quaternary ammonium compounds (quats) include, but are not limited to, trialkyl, dialkyl, dialkoxy alkyl, monoalkoxy, benzyl, and imidazolinium quaternary ammonium compounds, salts thereof, the like, and combinations thereof. In certain embodiments, the quaternary ammonium salt is an alkylamine benzyl quaternary ammonium salt, a benzyl triethanolamine quaternary ammonium salt, or a benzyl dimethylaminoethanolamine quaternary ammonium salt.

The corrosion inhibitor can be a quaternary ammonium or alkyl pyridinium quaternary salt such as those represented by the general formula: 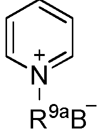 wherein R^{9a} is an alkyl group, an aryl group, or an arylalkyl group, wherein said alkyl groups have from 1 to about 18 carbon atoms and B is Cl, Br or I. Among these compounds are alkyl pyridinium salts and alkyl pyridinium benzyl quats. Exemplary compounds include methyl pyridinium chloride, ethyl pyridinium chloride, propyl pyridinium chloride, butyl pyridinium chloride, octyl pyridinium chloride, decyl pyridinium chloride, lauryl pyridinium chloride, cetyl pyridinium chloride, benzyl pyridinium and an alkyl benzyl pyridinium chloride, preferably wherein the alkyl is a C₁-C₆ hydrocarbyl group. In certain embodiments, the corrosion inhibitor includes benzyl pyridinium chloride.

The corrosion inhibitor can also be an imidazoline derived from a diamine, such as ethylene diamine (EDA), diethylene triamine (DETA), triethylene tetraamine (TETA) etc. and a long chain fatty acid such as tall oil fatty acid (TOFA). Suitable imidazolines include those of formula: 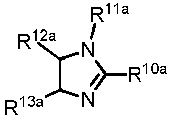 wherein R^{12a} and R^{13a} are independently a C₁-C₆ alkyl group or hydrogen, R^{11a} is hydrogen, C₁-C₆ alkyl, C₁-C₆ hydroxyalkyl, or C₁-C₆ arylalkyl, and R^{10a} is a C₁-C₂₀ alkyl or a C₁-C₂₀ alkoxyalkyl group. Preferably, R^{11a}, R^{12a} and R^{13a} are each hydrogen and R^{10a} is the alkyl mixture typical in tall oil fatty acid (TOFA).

The corrosion inhibitor compound can further be an imidazolinium compound of the following formula: 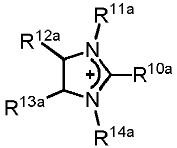 wherein R^{12a} and R^{13a} are independently a C₁-C₆ alkyl group or hydrogen, R^{11a} and R^{14a} are independently hydrogen, C₁-C₆ alkyl, C₁-C₆ hydroxyalkyl, or C₁-C₆ arylalkyl, and R¹⁰ is a C₁-C₂₀ alkyl or a C₁-C₂₀ alkoxyalkyl group.

Suitable mono-, di-and trialkyl as well as alkylaryl phosphate esters and phosphate esters of mono, di, and triethanolamine typically contain between from 1 to about 18 carbon atoms. Preferred mono-, di-and trialkyl phosphate esters, alkylaryl or arylalkyl phosphate esters are those prepared by reacting a C₃-C₁₈ aliphatic alcohol with phosphorous pentoxide. The phosphate intermediate interchanges its ester groups with triethyl phosphate with triethylphosphate producing a more broad distribution of alkyl phosphate esters. Alternatively, the phosphate ester may be made by admixing with an alkyl diester, a mixture of low molecular weight alkyl alcohols or diols. The low molecular weight alkyl alcohols or diols preferably include C₆ to C₁₀ alcohols or diols. Further, phosphate esters of polyols and their salts containing one or more 2-hydroxyethyl groups, and hydroxylamine phosphate esters obtained by reacting polyphosphoric acid or phosphorus pentoxide with hydroxylamines such as diethanolamine or triethanolamine are preferred.

The corrosion inhibitor compound can further be a monomeric or oligomeric fatty acid. Preferred are C₁₄-C₂₂ saturated and unsaturated fatty acids as well as dimer, trimer and oligomer products obtained by polymerizing one or more of such fatty acids.

The acid composition or cleaning composition can also comprise a scale inhibitor.

Suitable scale inhibitors include, but are not limited to, phosphates, phosphate esters, phosphoric acids, phosphonates, phosphonic acids, polyacrylamides, salts of acrylamido-methyl propane sulfonate/acrylic acid copolymer (AMPS/AA), phosphinated maleic copolymer (PHOS/MA), and salts of a polymaleic acid/acrylic acid/acrylamido-methyl propane sulfonate terpolymer (PMA/AMPS).

The acid composition or cleaning compositions can optionally comprise one or more nonionic, anionic, cationic or amphoteric surfactants or a mixture thereof to improve both performance and economy. The type of surfactant selected can vary, for example, depending on the nature of the particular conditions of use (e.g., type of residue to be removed or type of surface), and/or the nature of the solvent (e.g., aqueous versus a less polar solvent such as an alcohol or other organic solvent).

Preferably, the cleaning composition can comprise a nonionic surfactant. The nonionic surfactant can be Videt Q3^{™} surfactant, which demonstrates rapid wetting due to the excellent, associated dynamic surface tension profile and is commercially available from Vitech International, Inc.).

The cleaning composition can further comprise an organic inhibitor of silica or silicate deposition.

The inorganic or organic inhibitor of silica or silicate deposition can be boric acid, borates, oligomeric and polymeric compounds (e.g., acrylic acid-polyethylene glycol monomethacrylate copolymer (Product No. 3DT155 available from Nalco) and 2-propenic acid, polymer with a 2-propenyl-w-hydroxypoly(oxy-1,2-ethanediyl), sodium salt (Product No. 3DT156 available from Nalco).

The compositions can be provided in conjunction with a fluid or an aqueous medium and can be provided in a ready-to-use form or can be provided as separate agents and the composition can be prepared at the site of the treatment. Depending on the nature of use and application, the composition can be in form of a concentrate containing a higher proportion the salt of nitrogen base having a fluoro-inorganic anion, the concentrate being diluted with water or another solvent or liquid medium or other components such as the antifoaming agent, organic inhibitor of silica or silicate deposits, corrosion inhibitor, or surfactant before or during use. Such concentrates can be formulated to withstand storage for prolonged periods and then diluted with water in order to form preparations which remain homogeneous for a sufficient time to enable them to be applied by conventional methods. After dilution, such preparations may contain varying amounts of the cleaning composition, depending upon the intended purpose or end-use application.

The piece of equipment whose internal surface is cleaned in the method described herein could also be a pipe, a drain line, a fluid transfer line, a production well, or a subterranean hydrocarbon containing reservoir.

The method for cleaning the surface in contact with a liquid containing silica or silicates can be performed at a temperature from about 0°C to about 374°C, from about 20°C to about 320°C, or from about 40°C to about 100°C.

For an evaporator, the method can be performed at a temperature from about 20°C to about 100°C, from about 40°C to about 100°C, from about 40°C to about 90°C, from about 40°C to about 80°C, or from about 60°C to about 80°C.

For a boiler, the method is performed at a temperature from about 40°C to about 340°C, from about 250°C to about 330°C, or from about 300°C to about 330°C, from about 310°C to about 320°C, or from about 40°C to about 100°C.

The method for removing a silica or a silicate deposit can also remove organic deposits. The organic deposits that can be removed from the surface can water-soluble organics, bitumen, naphthenic acids, and organics which may be partially thermally degraded.

When the system to be cleaned is off line for cleaning, the method for cleaning the surface in contact with a liquid containing a silica or a silicate can be performed using a cleaning composition having a concentration of from about 1 v/v% to about 50 v/v%, from about 3 v/v% to about 25 v/v%, from about 10 v/v% to about 20 v/v%, or about 15 v/v% of the composition containing the salt of the nitrogen base having a fluoro-inorganic anion based on the total weight of the cleaning composition.

When the piece of equipment is on-line, the acid composition is from about 65 to about 85% active acid concentration in the acid composition and is fed to the system at from about 10 to about 100 ppm of active acid based on the aqueous system volume. Similarly it can be added to other aqueous systems with a chemical feed pump. When the piece of equipment is off-line, the acid composition comprises from about 10 wt.% to about 20 wt.% acid, preferably about 15 wt.% acid in an aqueous mixture and is added to the feed line to directly contact the internal surface of the equipment desired to be cleaned.

Further, when the system is off line for cleaning, the method for cleaning the surface in contact with a liquid containing silica or silicates can be performed using a cleaning composition having a concentration of from about 1 v/v% to about 50 v/v%, from about 3 v/v% to about 25 v/v%, from about 10 v/v% to about 20 v/v%, or about 15 v/v% of Product No. EC6697A (available from Nalco-Champion) based on the total weight of the acid composition or cleaning composition.

Additionally, when the system is on-line and a cleaning process using the acid composition or cleaning composition is used, the concentration of the cleaning composition in the feedwater is from about 5 mg/L to about 300 mg/L, from about 30 mg/L to about 300 mg/L, or from about 30 mg/L to about 100 mg/L. Preferably, when the system is on-line and a cleaning process using the acid composition or cleaning composition, the concentration of the acid composition or cleaning composition in the feedwater is from about 30 mg/L to about 100 mg/L.

In particular, the application site for use of the acid composition or cleaning composition can be four two-stage evaporators running in parallel. The evaporators operate based on the MVC principle. The primary and secondary stages of each evaporator operate in series and are housed within the same containment vessel. One evaporator can be larger than the other three evaporators.

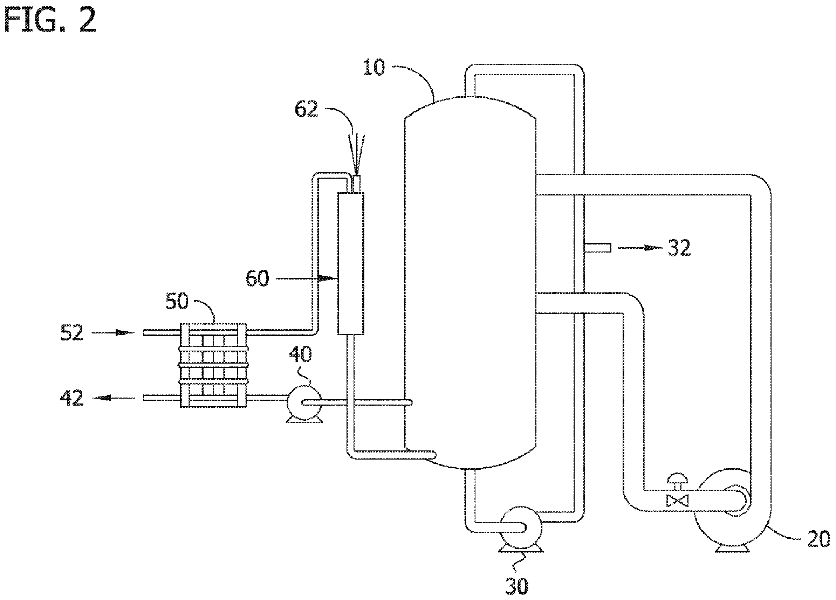

Figure 2 shows the major components in an evaporator system. A vapor compression evaporator (or brine concentrator) 10 can contain various internal structures including tube bundles and brine distributors. The vapor compression evaporator 10 is connected to a compressor 20, a recirculation pump 30, a deaerator 60 having a vent 62, and a distillate pump 40. Wastewater 52 is fed through a heat exchanger 50 into the deaerator 60 and into the vapor compression evaporator 10. The distillate 42 exits the vapor compression evaporator 10 into a distillate pump 40 and through the heat exchanger 50. The brine is recirculated through the recirculation pump 30 and waste brine exits the waste brine line 32. Steam is compressed by circulating through the compressor 20.

The typical operating characteristics for an evaporator system like the one shown in Figure 2 are detailed in Table 1.

**Table 1 - Typical Operating Characteristics (approx.)**

| Parameter | Smaller System | Larger System |
|---|---|---|
| Feedwater Flow (m3/hr) | 250 | 300 |
| Tube Bundle Surface Area (m²) | 12,000 | 12,000 |
| Feedwater Temp. (°C) | 80 | 80 |
| Sump Temp. (°C) | 105 | 105 |
| Total Distillate (m3/hr) | 244-245 | 293-294 |
| Blowdown Rate (m3/hr) | ~5-6 | ~6-7 |
| Total Cycles of Concentration (target) | 45-55 | 45-55 |

Falling film MVC evaporators have high heat transfer characteristics and efficiency compared to other evaporator designs (Heins, W. (2008). Technical Advancements in SAGD Evaporative Produced Water Treatment, International Water Conference in San Antonio, Texas, October 26-30, IWC-08-55). A high heat transfer coefficient is required to effectively evaporate the water and increase the temperature (ΔT ~27°C at application site) to produce high quality feedwater. Along with the evaporative process, the concentration of substances present in the feedwater can be cycled up as high as 45-55 times their initial concentration. The combination of higher temperature and higher concentrations of inorganic and organic substances increases the probability that the inversely soluble and particulate substances will deposit on wetted portions of evaporator system.

Thus, clean heat-transfer surfaces are very desirable for energy-efficient production of distillate from water that contains high levels of inorganic salts and organic contaminants. When deposits form insulating layers on heat-exchanger surfaces of evaporators, a reduction in U-values (heat-transfer coefficient) occurs. While operating conditions of the evaporator can be adjusted within limits to compensate for the decrease in U-values, low U-values at some point lead to reduction of distillate flow rate and de-rating of the evaporator operation. If insufficient distillate is available for plant operation (feed water for OTSGs and heat recovery steam generators (HRSGs)), then bitumen production can be reduced.

In addition to reducing evaporator heat-transfer efficiency and corresponding production of distillate, deposits can block heat-transfer tubes, distribution plates, and flow channels. System blockages can lead to poor distribution of water, further reduction in distillate production and make cleaning the system, even with mechanical means, very difficult, costly, labor-intensive, and time-consuming.

In thermal-recovery of bitumen operations, complex mixtures of waters (e.g., produced water, various recycled water streams, and brackish water) are combined to form evaporator feedwater. The ratios of the various water streams and their chemical compositions can vary greatly over time. Further, the drive to maximize efficiency of water usage and reduce water discharge via the increased level of water recycling can lead to increasing levels of deposit-forming ions and substances over time. This is sufficient to impede evaporator operation.

The average evaporator feedwater quality for five months of operation and the impact of operating at total cycles of concentration of 45 are shown in Table 2. The inorganic portion of water chemistry was measured by inductively-coupled plasma (ICP) spectroscopy.

**Table 2 - Evaporator Feedwater Quality and Impact of Cycles of Concentration**

| | Concentration (mg/L) | |
|---|---|---|
| Chemistry* | Feedwater | @ 45 cycles** |
| Aluminum (as Al) | 0.23 | 10.4 |
| Calcium (as Ca) | 2.24 | 101 |
| Magnesium (as Mg) | 0.58 | 26.1 |
| Ca + Mg Hardness (as CaCO₃) | 8.0 | 360 |
| Silica (as SiO₂) | 244 | 10,980 |
| TOC | 760 | 34,200 |

| | | |
|---|---|---|
| * Additional ions at high concentrations in the feedwater are boron ~29 mg/L, Na⁺ ~690 mg/L, Cl⁻ ~210 mg/L, and sulfate ~280 mg/L ** Assumes 100% Transport, deposit formation will result in lower concentrations measured in evaporator blowdown. | | |

Even though evaporator systems are operated at relatively high pH (e.g., feedwater pH is about 10.6, primary system pH is about 12.0, and secondary system is about 12.3), the combination of aluminum, hardness, and silica ions shown in Table 2 can and did result in a deposit forming over time. Due to the large volume of feedwater (e.g., 250-300 m³/hour target rate per evaporator) passing through the system, every mg/L of inorganic or organic material that is deposited from feedwater corresponds to 250-300 grams/hour or 2.2-2.6 metric tons/year deposited in each evaporator.

Due to water recycling and the need to maximize water usage, levels of deposit-forming inorganic ions and organics in feedwater increased over time.

When hydroblasting is used to remove internal deposits, the evaporator system is taken off-line, and cooled and drained of internal aqueous fluid. An entry hatch is opened and personnel/equipment for hydroblasting taken in to the evaporator system. Using a high-pressure water wash lance (hydroblasting), high-pressure water is used to remove deposits and scour the internal surfaces. The deposits removed from the internal surfaces are collected and taken out of the system for disposal. A longer high-pressure water lance is used to remove deposits from on the inside (e.g., tube-side) of long tubes in the heat-exchanger (or tube bundle) portion of the evaporator. After the evaporator is cleaned, the entry port of the system is sealed up and feedwater is added to reach a normal operating level within the system. The water recirculation pumps are started and steam is typically added to the shell-side of heat-exchanger to heat the recirculating water. The mechanical vapor compression pump is started and the system is placed back on-line.

For the method described herein, the evaporator system is taken off-line, drained of internal aqueous fluids and allowed to partially cool to an operating range from 0 °C to 60 °C, preferably, 40 °C to 60 °C. A distillate or relatively clean water (e.g., utility water) is used to rinse the system by partially filling the evaporator system. Water pumps are used to recirculate the rinse water inside the evaporator to help remove residual amounts of water that may contain high levels of deposit-forming substances (e.g., silica, hardness ions, aluminum, iron, and the like). The water recirculation pumps are stopped and the rinse water is drained from the evaporator. The system is then partially filled with distillate or relatively clean water and circulated using the recirculation water pumps. A sample of the recirculating water is chemically tested to ensure any application guidelines for water quality are met. The temperature of recirculating water is measured to ensure that it is in the operating range.

The volume of water in the evaporator system is measured using a water level monitor in order to determine how much concentrated cleaning solution should be added to reach desired concentration of acid composition or cleaning solution (e.g., if water volume inside of evaporator is 85 m³, then 15 m³ of concentrated cleaning solution would typically be added to produce a 15 v/v% concentration of acid composition or cleaning solution). Also, optionally, an antifoam agent is added to ensure that foaming within evaporator is minimized (e.g., 4 liters of antifoam product into 100 m³ or 100,000 liters of 15 v/v% cleaning solution would produce about 40 mg/L concentration of antifoam product). Depending on prior experience, more or less antifoam can be added to the cleaning solution. Additional antifoam can be injected into the cleaning solution if an unacceptable level of foaming persists. The concentration of the acid composition or cleaning solution is monitored by an acidity titration method to ensure that the target level of cleaning solution is maintained. If the acid composition or cleaning solution concentration is too high, then additional water can be added to the evaporator system. If the concentration of the acid composition or cleaning solution is too low, then additional concentrated acid composition or cleaning solution can be added. Samples of recirculating acid composition or cleaning solution are taken at prescribed intervals and water chemistry is measured by colorimetric analysis, acidity titration, pH, and ICP (inductively-coupled plasma) to determine the progress of cleaning process and to ensure that the concentration of the acid composition or cleaning solution is being maintained within the desired operating limits.

The temperature, and water level are also measured to ensure that system is operating within required limits. The system readings are checked to see if evidence of foaming is occurring. If an operating limit is reached (e.g., temperature of recirculating cleaning solution reaches recommended maximum limit), then the acid composition or cleaning solution or system operating conditions are adjusted (e.g., additional dilution water is added to cool the recirculating acid composition or cleaning solution and additional concentrated acid composition or cleaning solution is added to maintain the concentration of acid composition or cleaning solution). Chemical analyses of samples of recirculating acid composition or cleaning solution are used to determine when the cleaning process is completed (e.g., levels of deposit-forming ions such silica, hardness ions, aluminum and the like reach a substantially constant level indicating that the cleaning process is complete) and that any corrosion of the internal surfaces of the evaporator by the acid composition or cleaning solution is below the desired operating limits.

Then, the evaporator recirculation water pump is stopped and the acid composition or cleaning solution is drained from the system. Additional rinse water can be added, recirculated and drained as needed to remove residual amounts of acid composition or cleaning solution remaining in the system. The evaporator is then filled with feedwater to reach a normal operating level within the system. The water recirculation pumps are started and steam is typically added to the shell-side of heat-exchanger to heat the recirculating water, the mechanical vapor compression pump is started, and the system is placed back on-line.

The used acid composition or cleaning solution drained from the system is disposed. The disposal method can vary based on the application site. One disposal method is to neutralize the acid composition or cleaning solution with concentrated caustic until an approximately neutral pH is reached. The neutralized acid composition or cleaning solution can be disposed of by sending it to an off-site disposal facility. Another disposal method is to mix the used acid composition or cleaning solution with other water streams, neutralize the mixture to precipitate silica, hardness ions, and other deposit-forming substances, filter the precipitated solids (which are disposed), and then dispose of the liquid filtrate by injection into deep-well disposal sites. The number and sequence of steps required in the cleaning of the evaporator and the disposal of used cleaning solution can vary depending on the application site and system design.

Having described the invention in detail, it will be apparent that modifications and variations are possible without departing from the scope of the invention defined in the appended claims.

### EXAMPLES

The following non-limiting examples are provided to further illustrate the present invention.

### Example 1: Elemental analysis of deposits

The chemical composition of four deposits was determined by a standard composition analysis of X-ray fluorescence (XRF) for elemental composition, organics concentration by C/H/N/S elemental analysis, and the concentrations of organics/water of hydration and other volatile substances by heating to 925 °C for defined period of time. The results are shown in Table 3.

**Table 3. Chemical composition of deposits**

| Chemistry | Deposit #1 | Deposit #2 | Deposit #3 | Deposit #4 |
|---|---|---|---|---|
| Silica (as SiO₂) | 56% | 49% | 56% | 51% |
| Calcium (as CaO) | 15% | 41% | 11% | 5% |
| Sodium (as Na₂O) | 4% | 5% | 7% | 3% |
| Aluminum (Al₂O₃) | <0.5% | <0.5% | 1% | 3% |
| Chlorine (as Cl) | 3% | <0.5% | 2% | not detected |
| Magnesium (as MgO) | 2% | 1% | 1% | 8% |
| Potassium (as K₂O) | <0.5% | <0.5% | 4% | 2% |
| Sulfur (as SO₃) | <0.5% | <0.5% | <0.5% | 2% |
| Iron (as Fe₂O₃) | <0.5% | <0.5% | 1% | <0.5% |
| Organics | <0.5% | <0.5% | 5% | 14% |
| Loss at 925 °C^{a} | 20% | 2% | 17% | 25% |
| | | | | |
| Application -> | Evaporator | Once-Thru | Evaporator | Evaporator |
| | | HRSG | | |

| | | | | |
|---|---|---|---|---|
| ^{a}Likely due to water of hydration and also includes organics | | | | |

### Example 2: Dissolution of materials

The test method consisted of weighing several grams (~3 g) of a standard solid into a 4 oz. plastic jar. Followed by the addition of 100 mL of distilled water. The test acids were prepared in 5, 10, or 15 wt. % product in distilled water. The cap to the jar was attached and the jar was shaken vigorously several times to completely wet the solid. If necessary, the cap was loosened to vent the build-up of pressure. During room temperature tests, the jars were shaken ~3 times per week (Method 1). During higher temperature tests (75°C except where noted), the jars were stored in a circulating water bath with an integral shaker (Method 2). Periodically, samples (3 mL) were taken at least one hour after shaking. The samples (2 g) were then syringe filtered through a 0.45 µ filter. Filtered samples were then diluted with 98 mL of distilled water and submitted for solid composition analysis using X-ray fluorescence (XRF) and X-ray scattering (XRD) methods. Elemental analysis is presented in Tables 4-13.

The acids tested were urea tetrafluoroborate (commercially available from Nalco-Champion as Product No. EC6697A/R-50975, identified as composition A hereinafter), urea sulfate (commercially ava ilable from Vitech International, Inc. as A85, identified as composition B hereinafter), modified urea tetrafluoroborate (commercially available from Vitech International, Inc. as Product APW, identified as composition C hereinafter), urea hydrochloride (commercially available from Vitech International, Inc. as Product BJS-I, identified as composition D hereinafter), urea methanesulfonate (commercially available from Vitech International, Inc. as Product M5, identified as composition E hereinafter), hydrochloric acid (identified as composition F hereinafter), urea tetrafluoroborate (commercially available from Vitech Internationally, Inc. as Product ALB, identified as G hereinafter), and modified urea hydrochloride (commercially available from Vitech International, Inc. as Product BJS-HT, identified as H hereinafter), product N2560 (commercially available from Nalco -Champion, identified as composition I hereinafter), inhibited hydrochloric acid, commercially available from Nalco Champion as N2560, and urea-hydrofuoride hydrofluoride (commercially available from Nalco Champion as Product DC14, identified as composition J hereinafter).

The solids tested were talc, amorphous magnesium silicate, aluminum oxide, magnesium oxide, calcium metasilicate, calcium fluoride, aluminum silicate, magnesium aluminum silicate, magnetite, manganese dioxide, calcium carbonate, barium carbonate, strontium carbonate, barium sulfate, and strontium sulfate.

**Table 4. Dissolution of magnesium silicate hydroxide (talc) using 15 wt. % acid**

| Method 1 | | | | | | |
|---|---|---|---|---|---|---|
| | | Composition | | | | |
| Time | Element | A | B | C | E | D |
| 7 days | Mg as Mg | | 163 | 1664 | 75 | 97 |
| | Si as SiO₂ | | 191 | 4626 | 81 | 107 |
| 23 days | Mg as Mg | | 300 | 2390 | 123 | 171 |
| | Si as SiO₂ | | 240 | 6534 | 142 | 171 |
| 44 days | Mg as Mg | | 206 | 2676 | 338 | 216 |
| | Si as SiO₂ | | 134 | 7249 | 374 | 219 |
| 62 days | Mg as Mg | | 475 | 2929 | 208 | 253 |
| | Si as SiO₂ | | 271 | 7152 | 195 | 217 |

| Method 2 | | | | | | |
|---|---|---|---|---|---|---|
| 2 hours | Mg as Mg | 462 | 82 | 459 | 34 | 25 |
| | Si as SiO₂ | 1248 | 80 | 1283 | 34 | 29 |
| 6 hours | Mg as Mg | 1332 | 227 | 1362 | 141 | 111 |
| | Si as SiO₂ | 2693 | 197 | 2572 | 112 | 104 |
| 24 hours | Mg as Mg | 2778 | 395 | 3410 | 280 | 251 |
| | Si as SiO₂ | 5148 | 317 | 5251 | 280 | 299 |
| 48 hours | Mg as Mg | | 447 | | 313 | 298 |
| | Si as SiO₂ | | 297 | | 284 | 310 |

**Table 5. Dissolution of magnesium silicate hydroxide (florisil) using 15 wt. % acid**

| Method 1 | | | | | | |
|---|---|---|---|---|---|---|
| | | Composition | | | | |
| Time | Element | A | B | C | D | E |
| 7 days | Mg as Mg | | 2688 | 2808 | 2777 | 2760 |
| | Si as SiO₂ | | 194 | 6824 | 121 | 133 |
| 23 days | Mg as Mg | | 2580 | 2523 | 2686 | 2651 |
| | Si as SiO₂ | | 99 | 6519 | 177 | 109 |

| Method 2 | | | | | | |
|---|---|---|---|---|---|---|
| 2 hours | Mg as Mg | 1640 | 1657 | 1526 | 1451 | 999 |
| | Si as SiO₂ | 2480 | 119 | 3713 | 88 | 77 |
| 6 hours | Mg as Mg | 2104 | 2338 | 1990 | 2343 | 2213 |
| | Si as SiO₂ | 3659 | 174 | 4440 | 147 | 155 |
| 24 hours | Mg as Mg | 2103 | 2152 | 2093 | 2189 | 2136 |
| | Si as SiO₂ | 5090 | 257 | 5322 | 261 | 270 |

| | | | | | | |
|---|---|---|---|---|---|---|
| ^{a.} Values have units of mg/L. | | | | | | |

**Table 6. Dissolution of alumina using 15 wt. % acid**

| Method 1 | | | | | | |
|---|---|---|---|---|---|---|
| | | Composition | | | | |
| Time | Element | A | B | C | D | E |
| 7 days | Al as Al | 6556^{a} | 269 | 5598 | 59 | 9 |
| 16 days | Al as Al | 15474 | | 14107 | | |
| 37 days | Al as Al | 12361 | 3241 | 12193 | | |

| Method 2 | | | | | | |
|---|---|---|---|---|---|---|
| 6 hours | Al as Al | 1414 | 692 | 1051 | 299 | 77 |
| 24 hours | Al as Al | 7233 | 3467 | 6236 | 1782 | 359 |
| 48 hours | Al as Al | | 6519 | | 3234 | |

| | | | | | | |
|---|---|---|---|---|---|---|
| ^{a.} Values have units of mg/L. | | | | | | |

**Table 7. Dissolution of magnesium oxide using 15 wt. % acid**

| Method 1 | | | | | | |
|---|---|---|---|---|---|---|
| | | Composition | | | | |
| Time | Element | A | B | C | D | E |
| 7 days | Mg as Mg | 6952^{a} | 17597 | 7150 | 11812 | 8334 |
| 16 days | Mg as Mg | 5562 | 18722 | 12281 | 14638 | 8786 |
| 37 days | Mg as Mg | | | 12101 | | |

| | | | | | | |
|---|---|---|---|---|---|---|
| ^{a.} Values have units of mg/L. | | | | | | |

**Table 8. Dissolution of calcium metasilicate using 15 wt. % acid**

| Method 1 | | | | | | |
|---|---|---|---|---|---|---|
| | | Composition | | | | |
| Time | Element | A | B | C | D | E |
| 2 days | Ca as Ca | 7909^{a} | 665 | 9382 | 10197 | 9362 |
| | Si as SiO₂ | 6925 | 2149 | 5635 | 1910 | 1102 |
| 16 days | Ca as Ca | 8012 | 709 | 9131 | 10331 | 9893 |
| | Si as SiO₂ | 8101 | 1053 | 6661 | 939 | 979 |
| 37 days | Ca as Ca | | | | | 764 |
| | Si as SiO₂ | | | | | 377 |

| Method 2 | | | | | | |
|---|---|---|---|---|---|---|
| 6 hours | Ca as Ca | 6380 | 1437 | 6017 | 4196 | 3303 |
| | Si as SiO₂ | 5278 | 855 | 4191 | 438 | 271 |
| 24 hours | Ca as Ca | 6448 | 1428 | 6754 | 8083 | 7337 |
| | Si as SiO₂ | 5568 | 591 | 5375 | 364 | 293 |
| 48 hours | Ca as Ca | 6006 | 907 | 6017 | 7144 | 6507 |
| | Si as SiO₂ | 6223 | 391 | 5026 | 356 | 246 |

| Method 3^{b} | | | | | | |
|---|---|---|---|---|---|---|
| 1 day | Ca as Ca | 920 | 1787 | 4569 | 4627 | 4453 |
| | Si as SiO₂ | 406 | 64 | 783 | 3017 | 3709 |
| 3 days | Ca as Ca | 928 | 5351 | 6316 | 6681 | 5436 |
| | Si as SiO₂ | 485 | 130 | 828 | 4260 | 4265 |

| | | | | | | |
|---|---|---|---|---|---|---|
| ^{a.} Values have units of mg/L. ^{b.} Same as method 2, except temperature was set at 29 °C. Composition C and D were prepared as 5 wt. %. | | | | | | |

**Table 9. Dissolution of calcium fluoride using 15 wt. % acid**

| Method 1 | | | | | | |
|---|---|---|---|---|---|---|
| | | Composition | | | | |
| Time | Element | A | B | C | D | E |
| 7 days | Ca | 988^{a} | 1155 | 191 | 813 | 734 |
| | F by ISE | 5875 | 1392 | 13673 | 1541 | 765 |
| 21 days | Ca | 878 | 994 | 232 | 758 | 717 |
| | F by ISE | 350 | 1116 | 7755 | 1445 | 781 |
| 35 days | Ca | 766 | 860 | 251 | | |
| | F by ISE | | | | | |

| | | | | | | |
|---|---|---|---|---|---|---|
| ^{a.} Values have units of mg/L. | | | | | | |

**Table 10. Dissolution of aluminum silicate with 15 wt. % acid**

| Method 1 | | | | | | |
|---|---|---|---|---|---|---|
| | | Composition | | | | |
| Time | Element | A | B | C | D | E |
| 7 days | Al | 2323^{a} | 56 | 2252 | 62 | 20 |
| | Si as SiO₂ | 4545 | 117 | 4451 | 129 | 38 |
| 23 days | Al | 5114 | 174 | 5377 | 153 | 37 |
| | Si as SiO₂ | 6299 | 313 | 6034 | 253 | 74 |
| 23 days | Al | 6334 | | 6033 | | |
| | Si as SiO₂ | 7244 | | 6038 | | |

| Method 2 | | | | | | |
|---|---|---|---|---|---|---|
| 6 hours | Al | 2162 | 57 | 2335 | 29 | 26 |
| | Si as SiO₂ | 1247 | 111 | 3040 | 59 | 50 |
| 24 hours | Al | 4803 | 236 | 4738 | 95 | 78 |
| | Si as SiO₂ | 2928 | 417 | 3245 | 210 | 167 |

| Method 3^{b} | | | | | | |
|---|---|---|---|---|---|---|
| 1 day | Al | 114 | 17 | 103 | 109 | 10 |
| | Si as SiO₂ | 438 | 34 | 539 | 136 | 18 |
| 3 days | Al | 738 | 37 | 585 | 548 | 18 |
| | Si as SiO₂ | 1413 | 72 | 1432 | 235 | 34 |

| | | | | | | |
|---|---|---|---|---|---|---|
| ^{a.} Values have units of mg/L. ^{b.} Same as method 2, except temperature was set at 29 °C. | | | | | | |

**Table 11. Dissolution of magnesium aluminum silicate with 15 wt. % acid**

| Method 1 | | | | | | |
|---|---|---|---|---|---|---|
| | | Composition | | | | |
| Time | Element | A | B | C | D | E |
| 8 days | Al | 426^{a} | 312 | 351 | 260 | 232 |
| | Mg | 1451 | 1509 | 1365 | 1416 | 1386 |
| | Si as SiO₂ | 5393 | 206 | 5302 | 243 | 143 |
| 21 days | Al | 605 | 425 | 519 | 368 | 304 |
| | Mg | 1387 | 1509 | 1319 | 1411 | 1291 |
| | Si as SiO₂ | 6667 | 250 | 6249 | 264 | 132 |
| 35 days | Al | 1153 | | 871 | | |
| | Mg | 1777 | | 1637 | | |
| | Si as SiO₂ | 8325 | | 7864 | | |

| Method 2 | | | | | | |
|---|---|---|---|---|---|---|
| 2 hours | Al | 573 | | 429 | | |
| | Mg | 1070 | | 1106 | | |
| | Si as SiO₂ | 4057 | | 4304 | | |
| 6 hours | Al | 812 | 232 | 716 | 538 | 211 |
| | Mg | 1046 | 846 | 1060 | 1137 | 913 |
| | Si as SiO₂ | 3565 | 214 | 3548 | 580 | 305 |
| 24 hours | Al | 898 | 456 | 906 | 809 | 377 |
| | Mg | 1182 | 1133 | 1184 | 1258 | 1154 |
| | Si as SiO₂ | 4811 | 337 | 4553 | 467 | 388 |

| | | | | | | |
|---|---|---|---|---|---|---|
| ^{a.} Values have units of mg/L. | | | | | | |

**Table 12. Dissolution of magnetite with 15 wt. % acid**

| Method 1 | | | | | | |
|---|---|---|---|---|---|---|
| | | Composition | | | | |
| Time | Element | A | B | C | D | E |
| 7 days | Fe | 8565^{a} | 11549 | 2996 | 4060 | 558 |
| 21 days | Fe | 12409 | 15214 | 1972 | 9329 | 1524 |
| 37 days | Fe | 16711 | 20504 | 2034 | 13725 | |

| Method 2 | | | | | | |
|---|---|---|---|---|---|---|
| 6 hours | Fe | 2088 | 2209 | 1942 | 1536 | 884 |
| 24 hours | Fe | 8268 | 8069 | 3737 | 9599 | 3334 |
| 48 hours | Fe | 8405 | 13212 | 2210 | 9309 | 3441 |

| Method 3^{b} | | | | | | |
|---|---|---|---|---|---|---|
| | | A | A^{c} | | | |
| 7 days | Fe | 10026 | 4162 | | | |
| 22 days | Fe | 9996 | 6054 | | | |

| | | | | | | |
|---|---|---|---|---|---|---|
| ^{a.} Values have units of mg/L. ^{b.} Same as method 2, except temperature was set at 25 °C. ^{c.} Composition was prepared at 5 wt. %. | | | | | | |

**Table 13. Dissolution of manganese dioxide with 15 wt. % acid**

| Method 1 | | | | | | |
|---|---|---|---|---|---|---|
| | | Composition | | | | |
| Time | Element | A | B | C | D | E |
| 7 days | Al | 570^{a} | 142 | 745 | 80 | 40 |
| | Mn | 572 | 544 | 3009 | 759 | 186 |
| | Si as SiO₂ | 667 | 69 | 548 | 44 | 37 |
| 21 days | Al | 517 | 208 | 610 | 119 | 50 |
| | Mn | 920 | 947 | 5247 | 1333 | 290 |
| | Si as SiO₂ | 521 | 81 | 529 | 53 | 46 |

| Method 2 | | | | | | |
|---|---|---|---|---|---|---|
| 6 hours | Al | 431 | 161 | 264 | 316 | 49 |
| | Mn | 386 | 248 | 827 | 593 | 365 |
| | Si as SiO₂ | 541 | 47 | 297 | 108 | 31 |
| 24 hours | Al | 478 | 318 | 477 | 504 | 91 |
| | Mn | 1165 | 908 | 3699 | 1532 | 1072 |
| | Si as SiO₂ | 483 | 136 | 457 | 323 | 62 |
| 48 hours | Al | 505 | 395 | 545 | 596 | 130 |
| | Mn | 1337 | 1111 | 6494 | 2167 | 1129 |
| | Si as SiO₂ | 468 | 184 | 468 | 378 | 73 |

| | | | | | | |
|---|---|---|---|---|---|---|
| ^{a.} Values have units of mg/L. | | | | | | |

### Example 3: Corrosion rate titration study

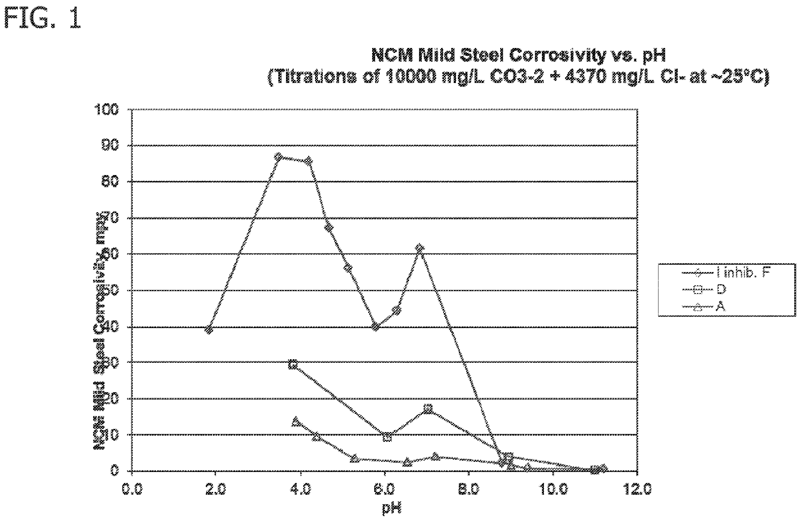

Various neat acids used in a titration were studied to evaluate their corrosion rates. A test fluid was prepared by dissolving sodium carbonate (35.3 g) and sodium chloride (14.4 g) in 2 L of distilled water. The test fluid was then placed in a 5 L beaker with a magnetic stirring bar. The stirring rate was adjusted to ensure good mixing without introducing bubbles into the test fluid. A Nalco Corrosion Monitor (NCM) mild steel and pH probes were installed into the fluid. The probes were then connected to a 3D TRASAR^{®} controller to record the data. Aliquots of a neat acid were added to the test fluid and readings were obtained. The titration was continued until the pH of the fluid was beyond the range of interest. The pH was adjusted to a pH value of 4. The neat acids used in this trial were compositions A, H, and I. Results from this study are shown in Figure 1.

It should be noted, the NCM probe readings took about nine minutes each, so titration aliquots required at least 20 minutes for equilibration.

Another set of corrosion rate titrations was conducted in as described but with the change that 35.3 g of sodium carbonate and 14.4 g of sodium chloride was dissolved in 2 L of distilled water. The pH was adjusted to pH 4 with acid.

### Example 4: Corrosion rate determination with bar style coupons

Mild steel coupons (Nalco Product No. P5035A) were used to evaluate the corrosion rates of various acids and acids in combination with corrosion inhibitors. The test acids were prepared as a 5, 15, or 25 wt.% solution in distilled water. The corrosion inhibitors were prepared as a 0.5, 1.0, 2.0 or 3.0 wt.% solution in distilled water. The test fluid (about 450 mL) was added to a wide mouth plastic bottle (500 mL). Various amounts of corrosion inhibitor(s) were added to the jar, the jar was capped, and the jar was shaken to mix the two liquids. Three mild steel coupons were attached to a perforated cap by nonmetallic attachments and height adjusted to be suspended below the surface of the fluid. The coupons were evenly spaced around the cap so they did not contact one another. The perforated cap and coupons were installed on the wide mouth jar, and the jar was placed in a circulating water bath. The circulating water bath was set at 65, 75, or 90 °C. A plastic tube connected to an airline was then inserted through the center hole of the cap. The air flow was set at between 5 to 10 mL/minute.

Coupons were removed, one after each time point (6, 24, and 48 hours), cleaned with a soft plastic scrubber, and rinsed once with distilled water and twice with acetone to dry. Coupons were then placed in a desiccator to equilibrate to temperature.

Following cleaning and temperature equilibration the coupons were weighed and the corrosion rate was calculated. The corrosion rate was calculated from weight loss of the coupon, exposure time, and surface area of the coupon.

The acid corrosion inhibitors tested were blends of a quaternary amine, a fatty acid, imidazoline, and an alkyl-derivatized imidazoline, phosphate organic phosphates, and zinc or their blends commercially available from Nalco champion as products, EC1509A, EC9374A, ASP542, 3DT129, and the like.

### Example 5: 48-Hour corrosion rate titration study

In a third example of corrosion rate titration studies, 176.7 g of sodium carbonate and 72.0 g of sodium chloride were dissolved in 10 L of distilled water. Coupons were pretreated with 10X product for 72 hours at 90°C. Approximately 8 L of the prepared solution was titrated with acid to a pH between 3.8 and 4.0, to eliminate all CO₂, diluted to 9 L and allowed to equilibrate overnight at 40°C. Following equilibration, the solution was further diluted to 10 L and the temperate was raised to 90°C. Coupons and pH and NCM probes were installed in the test cell. Acids used in this study include compositions D and E. Corrosion inhibitors used in this study include blend of organic quaternary amines, tall oil, fatty acid, and the like (commercially available from Nalco Champion as Product TX16010, identified as composition K hereinafter) Four test conditions were setup, D, F, D with K and D with L. After 48 hours, the coupons were removed, cleaned, and weighed as described in Example 4.

### Example 6: Hybrid corrosion rate determination using bar style coupons and composition D

In a hybrid corrosion rate study, of the previously described Example 5, was performed. A test fluid was prepared using 8.8 g of sodium carbonate, 3.6 g of sodium chloride, and 27.153 g of composition D were dissolved in 500 mL of distilled water. The pH of the equilibrated solution was 3.06. The solution was added to a wide mouth plastic bottle and the coupons (Nalco P5035A) were attached evenly around a perforated cap. The bottle was capped and an airline was attached with a flow rate of 5 mL/minute with 100% humidity. The study was conducted a temperature of 75°C. The corrosion rate was measured in millimeters per year (mmpy) and mils per year (mpy).

**Table 14. Corrosion rate of composition D**

| Coupon | Composition | Weight Loss (g) | Corrosion Rate | |
|---|---|---|---|---|
| | | | mmpy | mpy |
| 1 | D | 0.005 | 0.43 | 17 |
| 2 | D | 0.0411 | 0.88 | 35 |
| 3 | D | 0.0484 | 0.52 | 20 |

### Example 7: Hybrid corrosion rate determination using bar style coupons and composition A

A hybrid corrosion rate study was conducted in as described in Example 6 with the exception that 40.0046 g of composition A was used in the test fluid. The pH of the solution was 3.75.

**Table 15. Corrosion rate of composition A**

| Coupon | Composition | Weight Loss (g) | Corrosion Rate | |
|---|---|---|---|---|
| | | | mmpy | mpy |
| 1 | A | 0.0139 | 1.19 | 47 |
| 2 | A | 0.0614 | 1.32 | 52 |
| 3 | A | 0.1239 | 1.33 | 52 |

### Example 8: Hybrid corrosion rate determination using bar style coupons and composition B

A hybrid corrosion rate study was conducted as described in Example 6 with the exception that 16.535 g of composition B was used in the test fluid. The pH of the solution was 3.75.

**Table 16. Corrosion rate of composition B**

| Coupon | Composition | Weight Loss (g) | Corrosion Rate | |
|---|---|---|---|---|
| | | | mmpy | mpy |
| 1 | B | 0.0083 | 0.71 | 28 |
| 2 | B | 0.0144 | 0.31 | 12 |
| 3 | B | 0.0241 | 0.26 | 10 |

### Example 9: Hybrid corrosion rate determination using bar style coupons and composition F

A hybrid corrosion rate study was conducted as described in Example 6 with the exception that 43.89 g of composition F was used in the test fluid. The pH of the solution was 3.75.

**Table 17. Corrosion rate of composition F**

| Coupon | Composition | Weight Loss (g) | Corrosion Rate | |
|---|---|---|---|---|
| | | | mmpy | mpy |
| 1 | F | 0.0451 | 3.87 | 152 |
| 2 | F | 0.0531 | 1.14 | 45 |
| 3 | F | 0.0694 | 0.74 | 29 |

### Example 10: Corrosion rate determination using bar style coupons, composition B, and a corrosion inhibitor

A corrosion rate determination study was conducted using bar style coupons, an acid, and a corrosion inhibitor. A 15 wt. % of composition B was prepared by adding 75 g of composition B to 423 g of distilled water. To that 2.5 g of composition H was added. The solution was the added to a wide mouth plastic bottle and the coupons (Nalco P5035A) were attached evenly around a perforated cap. The bottle was capped and an airline was attached with a flow rate of 5 mL/min with 100% humidity. The study was conducted a temperature of 75 °C.

**Table 18. Corrosion rate of composition B**

| Coupon | Composition | Weight Loss (g) | Corrosion Rate | |
|---|---|---|---|---|
| | | | mmpy | mpy |
| 1 | B | 0.0203 | 1.74 | 69 |
| 2 | B | 0.1939 | 4.16 | 164 |
| 3 | B | 0.5833 | 6.26 | 246 |

### Example 11: Corrosion rate determination using bar style coupons and composition E

A corrosion rate determination study was performed as described in Example 6 with the exception that 75 g composition E and 420 g of distilled water were used.

**Table 19. Corrosion rate of composition E**

| Coupon | Composition | Weight Loss (g) | Corrosion Rate | |
|---|---|---|---|---|
| | | | mmpy | mpy |
| 1 | E | 0.0234 | 2.01 | 79 |
| 2 | E | 0.4012 | 8.61 | 339 |
| 3 | E | 0.6706 | 7.20 | 283 |

### Example 12: Corrosion rate determination using bar style coupons, composition C, and a corrosion inhibitor

A corrosion rate determination study was performed as described in Example 9 with the exception that 75 g composition C, 5 g of composition I, and 420 g of distilled water were used.

**Table 20. Corrosion rate of composition C**

| Coupon | Composition | Weight Loss (g) | Corrosion Rate | |
|---|---|---|---|---|
| | | | mmpy | mpy |
| 1 | C | 0.4123 | 35.40 | 1394 |
| 2 | C | 1.3481 | 28.94 | 1139 |
| 3 | C | 2.0134 | 21.61 | 851 |

### Example 13: Corrosion rate determination using bar style coupons, composition C, and a corrosion inhibitor

A corrosion rate determination study was performed as described in Example 9 with the exception that 75g composition C, 5 g of composition I, and 415 g of distilled water were used.

**Table 21. Corrosion rate of composition C**

| Coupon | Composition | Weight Loss (g) | Corrosion Rate | |
|---|---|---|---|---|
| | | | mmpy | mpy |
| 1 | C | 0.4155 | 35.68 | 1405 |
| 2 | C | 1.2291 | 26.38 | 1039 |
| 3 | C | 1.8319 | 19.66 | 774 |

### Example 14: Corrosion rate determination using bar style coupons and composition D

A corrosion rate determination study was performed as described in Example 9 with the exception that 75 g composition D, no corrosion inhibitor, 425 g of distilled water, and 8.24 g sodium chloride were used.

**Table 22. Corrosion rate of composition D**

| Coupon | Composition | Weight Loss (g) | Corrosion Rate | |
|---|---|---|---|---|
| | | | mmpy | mpy |
| 1 | D | 0.0079 | 0.60 | 23 |
| 2 | D | 0.0161 | 0.35 | 14 |
| 3 | D | 0.0369 | 0.40 | 16 |

### Example 15: Corrosion rate determination using bar style coupons and composition A

A corrosion rate determination study was performed as described in Example 9 with the exception that 75 g composition A, no corrosion inhibitor, 425 g of distilled water, and 4.12 g sodium chloride were used.

**Table 23. Corrosion rate of composition A**

| Coupon | Composition | Weight Loss (g) | Corrosion Rate | |
|---|---|---|---|---|
| | | | mmpy | mpy |
| 1 | A | 0.382 | 2.88 | 113 |
| 2 | A | 0.15 | 3.22 | 127 |
| 3 | A | 0.3312 | 3.55 | 140 |

### Example 16: Corrosion rate determination using bar style coupons and composition B

A corrosion rate determination study was performed as described in Example 9 with the exception that 75 g composition B, no corrosion inhibitor, 425 g of distilled water, and 4.12 g sodium chloride were used.

**Table 24. Corrosion rate of composition B**

| Coupon | Composition | Weight Loss (g) | Corrosion Rate | |
|---|---|---|---|---|
| | | | mmpy | mpy |
| 1 | B | 0.0458 | 3.45 | 136 |
| 2 | B | 0.3275 | 7.03 | 277 |
| 3 | B | 0.66 | 7.08 | 279 |

### Example 17: Corrosion rate determination using bar style coupons and composition E

A corrosion rate determination study was performed as described in Example 9 with the exception that 75 g composition E, no corrosion inhibitor, 425 g of distilled water, and 4.12 g sodium chloride were used.

**Table 25. Corrosion rate of composition E**

| Coupon | Composition | Weight Loss (g) | Corrosion Rate | |
|---|---|---|---|---|
| | | | mmpy | mpy |
| 1 | E | 0.0815 | 6.14 | 242 |
| 2 | E | 0.304 | 6.53 | 257 |
| 3 | E | 0.7726 | 8.29 | 326 |

### Example 18: Lab scale test

The cleaning composition used in these tests was a 15 v/v% of composition A in water.

A simple laboratory bench unit was designed and built to evaluate new cleaning chemistries under dynamic conditions. This laboratory bench unit is represented by Figure 2. The deposit 250 for testing was placed in a testing reservoir 240 that was in fluid connection with the cleaning solution reservoir 230. The cleaning solution reservoir 230 is placed in a temperature controlled water bath 210. The cleaning solution can be pumped through a pump 220 from the cleaning solution reservoir 230 to the testing reservoir 240.

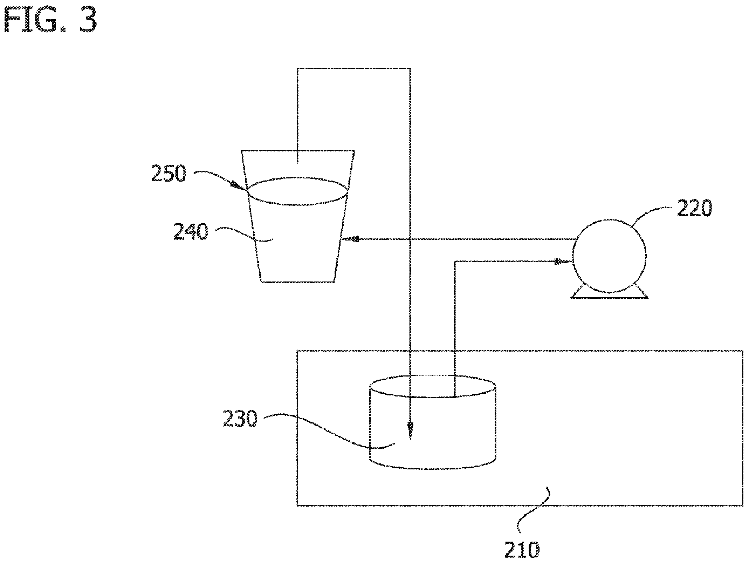

The testing apparatus evaluated various cleaning chemistries to obtain data with respect to performance and possible cleaning methods (including temperature, concentration, and time). Additionally, programs and recommendations can be developed for specific deposits. The results translated to improved field performance. Figure 3 is a schematic of the laboratory scale dynamic test apparatus.

The test method consisted of holding the cleaning solution at a constant temperature while recirculating the cleaning composition across a field deposit sample. The field samples used for the experiment were analyzed for composition and then dried at 105 °C. Initial sample weight was taken on the dried, as-received deposit. The deposit sample or object with deposit adhering to it was immersed in flowing cleaning solution for the prescribed test period. The cleaning solution could be heated with test temperatures of 60°C or 80 °C typically used. The entire container for deposit sample could also be immersed in the heating bath. When the test was completed, the remaining deposit was rinsed with deionized water and blotted dry. The recovered residual deposit was then dried at 105 °C. The final weight of the dried deposit was taken and used to determine % dissolution. Aliquots of test solution could be removed during the test to evaluate ion concentrations using ICP spectroscopy and measure treatment performance as cleaning progresses. This procedure allowed for multiple cleanings, varying temperatures and times.

The test method consisted of holding the cleaning solution at a constant temperature while recirculating the cleaning composition across a field deposit sample. The field samples used for the experiment were analyzed for composition and then dried at 105 °C. Initial sample weight was taken on the dried, as-received deposit. The deposit sample or object with deposit adhering to it was immersed in flowing cleaning solution for the prescribed test period. The cleaning solution could be heated with test temperatures of 60 °C or 80 °C typically used. The entire container for deposit sample could also be immersed in the heating bath. When the test was completed, the remaining deposit was rinsed with deionized water and blotted dry. The recovered residual deposit was then dried at 105 °C. The final weight of the dried deposit was taken and used to determine % dissolution. Aliquots of test solution could be removed during the test to evaluate ion concentrations using ICP spectroscopy and measure treatment performance as cleaning progresses. This procedure allowed for multiple cleanings, varying temperatures and times.

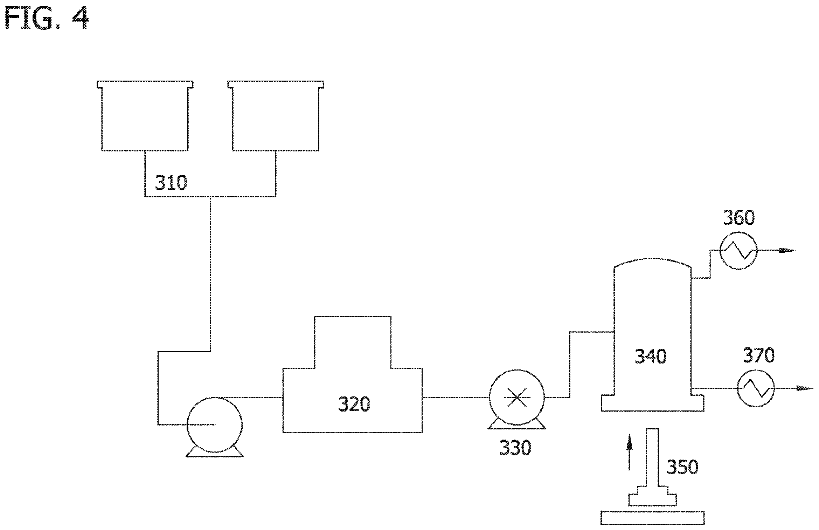

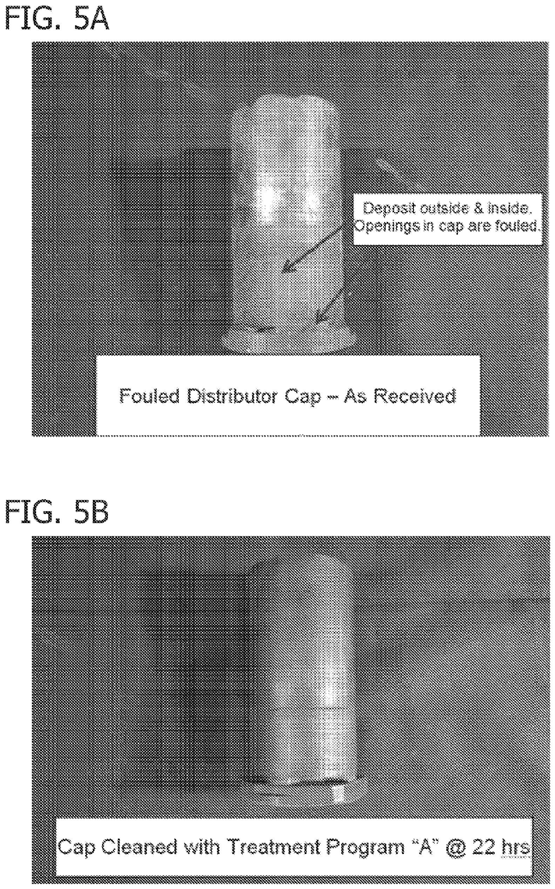

In the situation where a larger object (e.g., water distributor cap) with deposit on it needed to be tested, the sample container was enlarged to allow the entire specimen to be immersed in the recirculating cleaning solution. Figures 5A and 4B (before and after pictures) of the evaporator water distributor cap showed exceptional cleaning ability of the cleaning composition. No mechanical cleaning was used on distributor cap.

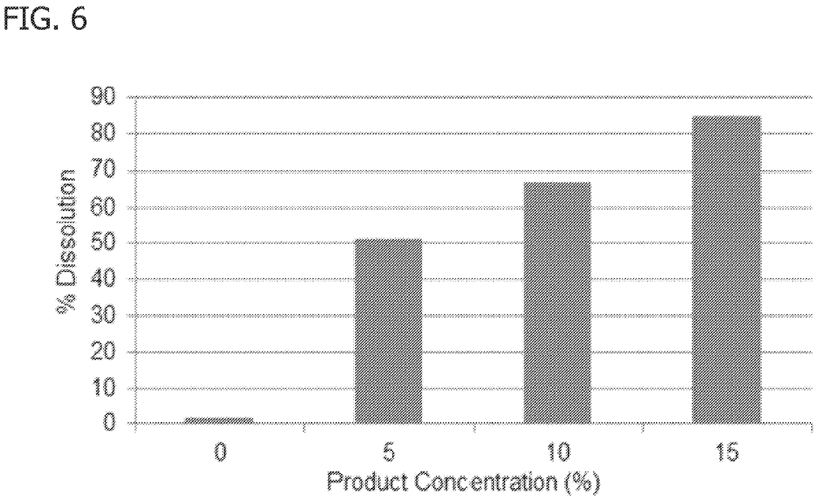

Lab studies to measure dissolution of metal silicate and organic-based evaporator deposits from application site were conducted. Figure 6 showed that deposit dissolution results were strongly dependent upon the concentration of cleaning solution (0-15 v/v%). Very good results of 85% dissolution of deposit removal occurred with 15 v/v% concentration of the cleaning composition were obtained at 60 °C after 22 hours.

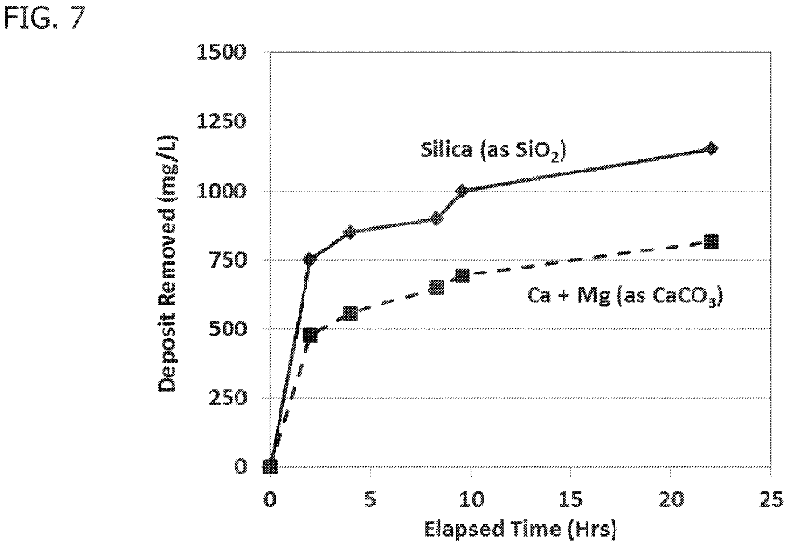

Figure 7 showed that hardness ions and silica were rapidly released from an evaporator deposit sample on the water distributor cap during the first five to ten hours of treatment at 60 °C. This rapid deposit dissolution period was followed by a lower dissolution rate from 10 to 22 hours as almost all of deposit was dissolved and more resistant portions of deposit were attacked.

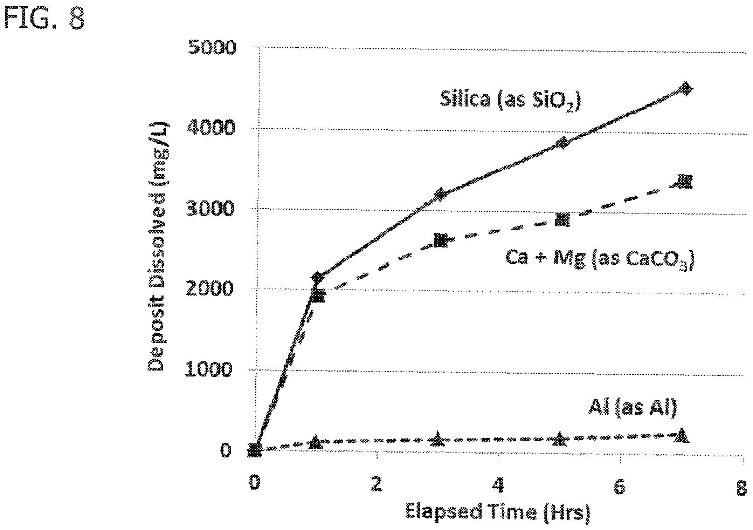

Figure 8 demonstrates that the sump deposit dissolution with the cleaning composition shows similar trends as Fig. 6 (distributor cap deposit dissolution).

### Example 19: Deposit dissolution testing

Due to the different compositions, particle sizes, and surface areas, each of the deposits were ground with a mortar and pestle and then sieved through a #14 sieve so each of the samples would have similar particle size and surface area. Each test solution was prepared by placing 500.00 grams of each solution in a sealable high density polyethylene (HDPE) bottle of known weight. The solution was mixed with a two inch octagon stir bar of known weight on a stirrer hot plate set to a temperature of 55-60 °C and a mix speed of 5.5 for 90 minutes before 5.0 grams of scale deposit was added.

The scale deposit (5.0 g) was added to the preheated test solution and mixed for 16 hours 'at the same temperature and mix speed. After 16 hours the solution was filtered through filter papers of known weight using the vacuum filtration system. The filter paper and HDPE bottles were dried in the forced air oven until dry. The dry weights of the bottle, stir rod, and filter paper were recorded. The percentage of dissolved material was then calculated as follows: Percentage Deposit Dissolved = {[Initial Scale weight - Total Residue Weight(TRW)]/Initial Scale Weight}* 100

**Table 26. Deposit dissolution results**

| **Cleaning Chemistry** | **% Dissolved Deposit #1** | **% Dissolved Deposit #2** | **% Dissolved Deposit #3** | **% Dissolved Deposit #4** |
|---|---|---|---|---|
| Composition A | 80% | 91% | 80% | 69% |
| HF | 78% | 39% | 63% | 51% |
| ABF | 69% | 31% | 56% | 28% |

### Example 20: Pilot Scale Boiler Tests

Pilot Scale Boiler (PSB) equipment is used to evaluate efficacy of treatment chemistries and combinations of those treatments. The equipment is also used to evaluate impact of changes in water quality and operating conditions. PSB equipment is designed to provide a rapid indication (within five days) of long-term behavior in larger plant unit operations.

The PSB of Figure 4 has feedwater fed from feed tanks 310, a pump connecting the feed tanks 310 to the deaerator 320, a boiler feedwater (BFW) pump 330 connecting the deaerator 320 and the boiler 340, a firerod 350 contained in the boiler 340, a condensate exit stream 360 and a blowdown stream 370.

During testing of treatment chemistries and operating conditions, PSB equipment was run under more severe/stressed conditions (water chemistry, heat flux, and residence time) than SAGD plant boilers and steam-generators, in order to reduce the time required to determine results (Table 27).

**Table 27. Typical comparative operating conditions for PSB test versus OTSG**

| **Parameter** | **Pilot Scale Boiler** | **Location #1** |
|---|---|---|
| Design | Drum | OTSG |
| Energy Source | Electrically-heated fire rod | Natural Gas |
| Steam Pressure | 10,340 kPa (1500 psig) | 9,653 kPa (1400 psig) |
| Steam Temperature | 314 °C | 309 °C |
| Initial Heat Transfer Tube Wall Temperature | up to 344 °C | --- |
| Heat Flux | up to 361 kW/m² (114,000 BTU/ft²/hr) | Refer to footnote* |
| 50% Holding Time (or Residence Time) | ~1.5 hours | <2 minutes (estimate) |
| Concentration Cycles (or Steam Quality | 10 | 5 (80% quality) |

| | | |
|---|---|---|
| *Typical heat flux range listed in literature is 47-125 kW/m² or 15,000-40,000 BTU/ft²/hour (Gwak, K.-W., Bae, W. (2010). A Review of Steam Generation for In -Situ Oil Sands Projects. Geosystem Engineering, 13(3), 114.) | | |

Water chemistry used for PSB tests is summarized in Table 28. The tests run at 10 cycles of concentration and the water inside the PSB (measured as blow down) will be 10 X more concentrated in all of the feed water chemistries - if no deposition occurs. The feedwater chemistry and PSB cycles of concentration were chosen to provide blowdown water chemistry that is representative of OTSG blowdown water chemistry in Oil Sands applications. Some plants may have higher or lower concentrations of specific chemistries in OTSG blowdown and PSB tests are readily adaptable to test a wide range of water chemistries and operating conditions.

**Table 28. Pilot scale boiler chemistry (mg/L) feedwater and 10 X cycles of concentration vs. OTSG***

| **Chemistry of Property** | **PSB Feedwater ×10 Cycles (mg/L)** | **Location #1 Feedwater × 4 Cycles*** |
|---|---|---|
| Calcium (as Ca) | 1.2 | 1.2 |
| Magnesium (as Mg) | 1.0 | < detection limit |
| Silica (as SiO2) | 300 | 100 |
| Sodium (as Na) | 2,680 | 3,920 |
| Chloride (as Cl) | 3,870 | 4,040 |
| Lithium (as Li) | 6.0 | 4.4 |
| Conductivity (µS) | 13,500 | 17,040 |
| pH | 10.5 | 10.3 |

| | | |
|---|---|---|
| *Corresponding to 75% steam quality and assumes no deposition occurs (for comparison) | | |

As shown in Table 28, the water quality used for PSB tests at 10 cycles of concentration is generally more severe than SAGD Location #1 operating at 75% steam quality (4 cycles of concentration) and is suitable for doing accelerated testing with equipment such as PSB. Silica volatilization in steam is small (approximately 0.5%) under these operating conditions versus silica concentration in boiler water or blowdown (Nalco (2004), Selective Silica Carryover, Technifax TF-5, 1-3.). Modifications of water and operating conditions listed above can be made when PSB equipment is used to evaluate operating conditions and treatment programs relevant to a variety of SAGD plant locations or other types of boilers (e.g., package or utility).

**Table 29. Pilot scale boiler performance results for variety of treatment options**

| Feedwater Treatment | Thermal Deposition Rate* | Deposit Rate (mg/hr)* |
|---|---|---|
| None | 231 | 3.70 |
| Nalco Product No. 3DT156 | -75 | 3.15 |
| Composition A** | 158 | 1.60 |
| Composition A** with Nalco Product No. 3DT156 | -190 | 0.42 |

| | | |
|---|---|---|
| * Lowest values indicate best results ** Concentration of ~30 mg/L as product in feedwater | | |

The overall performance results listed in Table 29 indicate that the lowest combination of thermal deposition rate and deposit rate (mg/hr) were obtained using a treatment combination of cleaning solution (at dosage of ~30 mg/L) and surfactant added to feedwater of PSB.

### Example 21: Antifoaming agent tests

A cleaning composition comprising 15 v/v% composition A in water was used to evaluate the efficacy of various antifoaming agents. The cleaning composition (10 grams) and the prescribed amount of antifoaming agent were added to each test tube. The height of liquid in each test tube was measured in mm and recorded before shaking. Each tube was covered with parafilm, vigorously shaken for one minute, and the height of foam was measured in mm and recorded. The % foam height after one minute of test solution shaking and one minute of test solution sitting was determined by dividing the foam height by the initial liquid height and multiplying by 100. This % foam height was recorded. The test solution was then allowed to sit for 30 minutes and the foam persistence in the test solutions was recorded as yes or no.

The antifoam agents tested were nonionic silicone (available commercially from Nalco, Inc. as Product No. 336FG, identified as M hereinafter), an ethoxylated, propoxylated C₁₄-C₁₈ alcohol (available commercially from Nalco, Inc. as Product No. 00PG-007, identified as N hereinafter), nonionic alkoxylated C₆-C₁₀ alcohol comprising both ethoxy and propoxy groups (available commercially from Nalco, Inc. as Product No. R-50360, identified as O hereinafter), nonionic propylene glycol, ethylene glycol block copolymer (available commercially from Nalco, Inc. as Product No. PP10-3038, identified as P hereinafter), an ethoxylated C₁₁-C₁₄ alcohol (available commercially from Nalco, Inc. as Product No.PP10-3148, identified as Q hereinafter), a propylene oxide glycol polymer (available commercially from Nalco, Inc. as Product No. 7906, identified as R hereinafter), a C₁₆-C₁₈ alcohol (available commercially from Nalco, Inc. as Product No.7465, identified as S hereinafter).

**Table 30. Percent Foam Height Results***

| **Antifoam** | **0 mg/L (blank)** | **10 mg/L** | **100 mg/L** | **1,000 mg/L** | **10,000 mg/L** |
|---|---|---|---|---|---|
| None | 69% | | | | |
| N | | 52% | 3% | 5% | 6% |
| O | | 65% | 23% | 24% | 6% |
| P | | 56% | 76% | 73% | 15% |
| Q | | 55% | 82% | 97% | 97% |
| R | | 52% | 19% | 10% | 0% |
| M | | 56% | 0% | 0% | 0% |
| S | | 65% | 61% | 19% | 13% |

| | | | | | |
|---|---|---|---|---|---|
| * Lower % is better result | | | | | |

**Table 31. Foam Persistence Results***

| **Antifoam** | **0 mg/L (blank)** | **10 mg/L** | **100 mg/L** | **1,000 mg/L** | **10,000 mg/L** |
|---|---|---|---|---|---|
| None | Yes | | | | |
| N | | Yes | No | No | No |
| O | | Yes | Yes | Yes | No |
| P | | Yes | Yes | Yes | Yes |
| W | | Yes | Yes | Yes | Yes |
| R | | Yes | Yes | Yes | No |
| M | | Yes | No | No | No |
| S | | Yes | Yes | Yes | Yes |

| | | | | | |
|---|---|---|---|---|---|
| * "No" foam persistence is better result | | | | | |

As is shown in Tables 30 and 31, the antifoam agents showing the most advantageous results were M, O, and R. As can be seen by the results, some of the antifoaming agents were not effective at reducing the foaming of the cleaning solution. In particular, the antifoaming agents of M and N were the most effective of the antifoaming agents tested. The environment of cleaning was one of high acid, high conductivity, a high concentration of cleaning solution and an unusual urea tetrafluoroborate compound, as well as other operating conditions in the evaporator of high temperature and presence of contaminant ions.

### Example 22: Fields tests

Based on very positive lab results for dissolution of deposits obtained from plant evaporators, a full-scale cleaning of evaporator was conducted. To start cleaning, the system was taken off-line, drained and flushed with utility water. A known volume of utility water was added to the evaporator, and then concentrated cleaning composition was added to provide an approximately 15% v/v concentration. Since the evaporator was recently taken off-line, the system was still hot at the start of the cleaning process. Some difficulty was initially encountered in keeping the on-line temperature readings of the cleaning solution below the recommended 80°C limit.

After the initial addition of the cleaning solution, a serious foaming situation was detected inside evaporator based on wide fluctuations in water level measurements. Foaming is a serious problem that must be avoided and quickly remedied when detected because it can cause safety alarms/switches to activate, it can cause cavitation to occur in recirculating pumps, it can limit recirculation of internal fluids, it can result in system vibration, and it can result in fouling of the demister system, which results in contamination of the evaporator distillate and serious consequences to the evaporator system. The foaming that occurred was unexpected and was remedied by addition of an antifoam with similar composition to M at a dosage rate of approximately 40 mg/L. Foaming within the evaporator system subsided and it was possible to continue with the chemical cleaning process using a 15v/v% composition A cleaning composition.

It was also noted during the cleaning process that the temperature of the cleaning solution tended to increase 2-3°C/hour based on the pumping energy added to the system in order to continuously recirculate the cleaning solution. In order to provide cooling to the system during the cleaning process, additional amounts of utility water and the cleaning composition were added to the system over a 25 hour period. The noticeable decreases in temperature represent periods when significant amount of cool utility water + fresh cleaning composition were added to the existing cleaning solution. Subsequent improvements in cleaning procedure have significantly reduced the need to add more utility water to provide cooling to the system.

Progress of evaporator cleaning process was monitored by analyzing grab samples of cleaning solution from primary and secondary sumps. ICP spectroscopy was used to measure concentrations of aluminum, calcium, magnesium and silica from deposit dissolution. ICP spectroscopy (chromium and iron) was also used to determine if any significant corrosion was occurring on internal surfaces of evaporator system during cleaning. The concentration of cleaning composition was determined by a simple titration procedure and additional treatment added to maintain approximately 15% v/v concentration of cleaner, as needed.

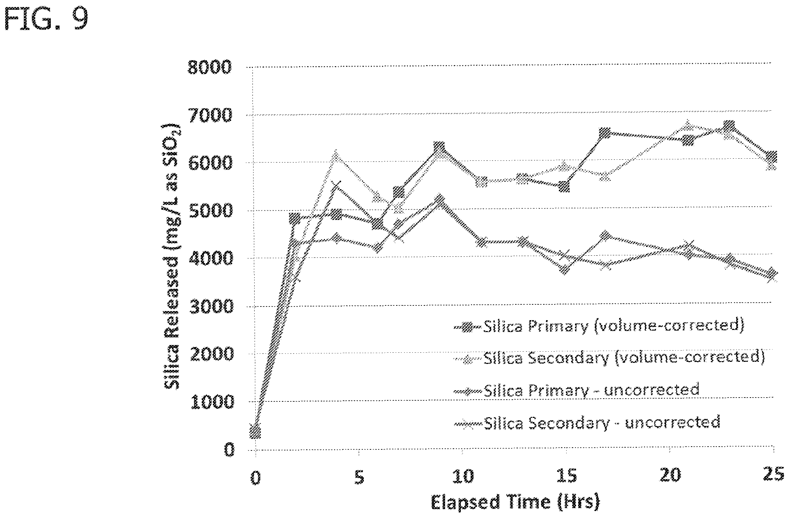

Because the volume of cleaning solution increased during the cleaning process, ICP spectroscopy results need to be compensated for changes in system volume, which produces dilution in concentrations of species being analyzed. A comparison of ICP spectroscopy readings for silica concentration (uncorrected versus system volume-corrected) from samples of cleaning solution is shown in Figure 9.

It is clear that correcting ICP spectroscopy readings for changes in system volume during evaporator cleaning is very important in properly interpreting the results. The uncorrected analytical results suggest that cleaning was complete after several hours. Using uncorrected analytical results could have led to decision to terminate cleaning process before it was complete. In reality, removal of silicate-based deposits was occurring during entire 25 hour cleaning period. Although most of the silica from deposits was released during first few hours of cleaning, the more tenacious deposits were likely being removed during 5-25 hours of cleaning. Further, the use of volume-corrected results showed about 70% more dissolution of silica-based deposits, as compared to the uncorrected ICP spectroscopy results. Based on the trends above, system-volume corrected results will be used during rest of the discussion.

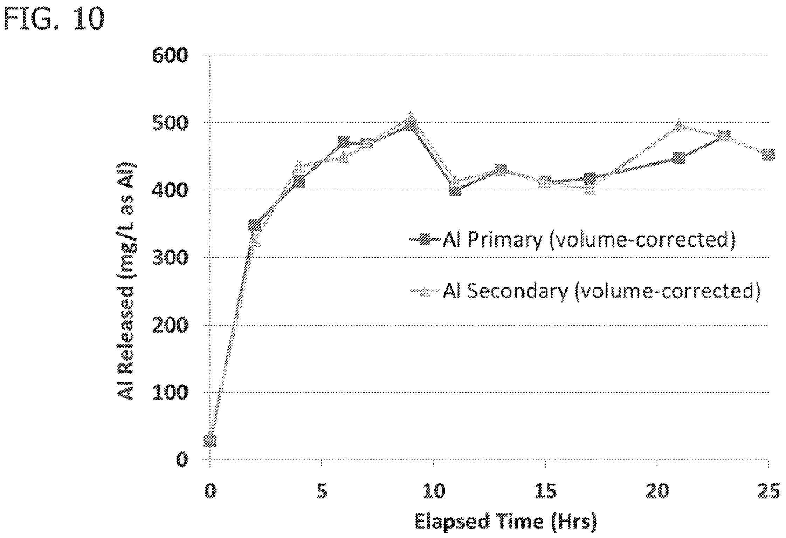

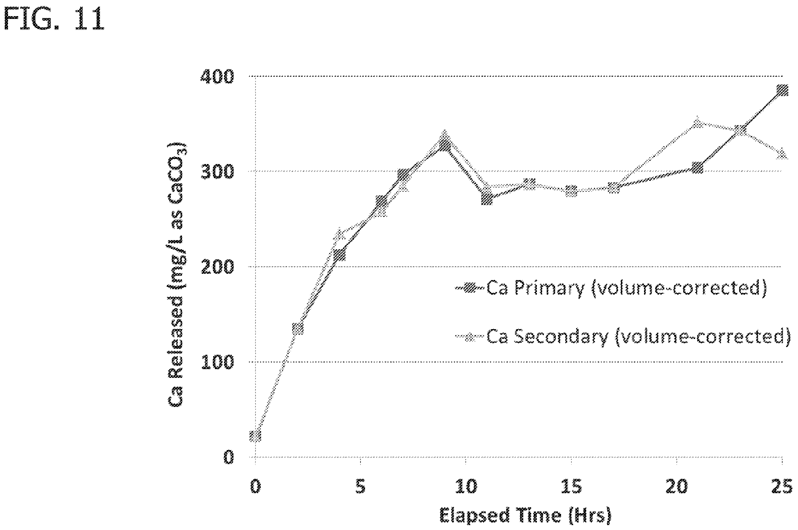

System-volume corrected ICP spectroscopy results for aluminum, calcium, and magnesium (refer to Figures 10-12) gave similar trends as the analytical readings for silica.

The cleaning solution grab samples obtained during the cleaning process were very darkly colored, which indicates high level of organics likely were removed from deposits by the cleaning composition. Dark-colored substances precipitating from cleaning samples over time were collected and measured by C/H/N analyzer. The analytical results showed about 700 mg/L of organics were present, which indicates the cleaning composition is capable of removing inorganic and organic-based deposits.

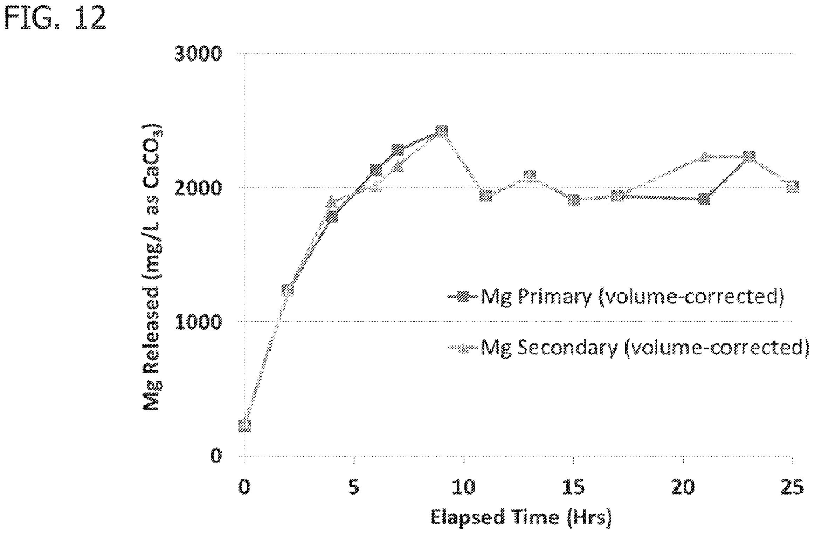

In addition to analyzing cleaning solution samples to quantify dissolution of inorganic and organic deposits, those same samples were also measured for chemical evidence of general corrosion on internal surfaces of evaporator. The largest internal surface area of evaporator being cleaned is AL-6XN^{®} which is a superaustenitic stainless steel alloy composed of 23.5-25.5% nickel, 20-22% chromium, 6-7% molybdenum content, trace elements and remainder of approximately 41-51% iron content (Allegheny Technologies Inc., 2014). The evaporator heat-exchanger tube bundles were manufactured from AL-6XN alloy and had a surface area of approximately 12,000 m³. Inductively coupled plasma (ICP) spectroscopy was used to measure chromium and iron concentrations in the cleaning composition samples. Those analyses were combined with information about the evaporator surface area, AL-6XN specific gravity and cleaning solution volume in order to estimate general corrosion rate of AL-6XN. Figure 12 shows the estimated general corrosion rate of AL-6XN and the temperature of the cleaning solution (average of primary and secondary readings) during the cleaning process.

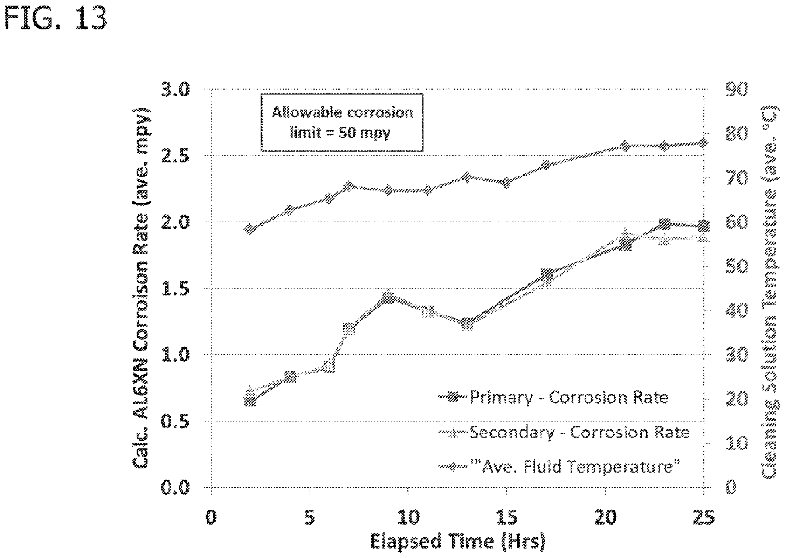

The estimated corrosion rate (refer to Figure 13) increases as the temperature of cleaning solution increases, a reasonable response. Maximum general corrosion rate on AL-6XN estimated from cleaning fluid analyses was 1.9 mpy (48 µm/yr), which is well below the allowable limit of 50 mpy (1270 µm/yr) set by the customer. Since use of Cleaning Treatment "A" is typically a 1-2 day process, a negligible increase of ~0.005-0.01 mpy (~0.13-0.26 µm/yr) per cleaning would be added to overall annual corrosion rate of AL-6XN.

The 15 v/v% solution of the cleaning composition was able to remove deposits throughout the evaporator and remove deposits that resisted removal by mechanical cleaning with a high-pressure wash.

Although exceptional results were obtained with the first use of the cleaning composition of the invention, some residual deposits were observed in secondary system of the evaporator during inspection. However, it was noted that any residual deposits after chemical cleaning were much easier to remove by a mechanical cleaning. Further refinements in application of the cleaning composition and multiple cleanings over time of the evaporator system would likely inhibit the formation of tenacious deposits in the wetted portion of the evaporator after chemical cleaning. Inspections of evaporators which used a 15 v/v% solution of the cleaning composition have shown it is possible to clean down to the bare-metal surface throughout the primary and secondary systems.

After utilizing 15 v/v% solution of the cleaning composition to remove evaporator deposits, significant volumes of used cleaning solution (up to 200 m³ or more) may need to be removed before bringing the evaporator back on-line. During initial cleaning of a plant evaporator, used cleaning solution was neutralized with caustic and then removed by trucking off-site for disposal. Disposal of used cleaning solution by utilizing on-site systems is preferred and less costly. Testing was conducted to ensure that used 15 v/v% solution of the cleaning composition would be fully compatible with the downstream disposal water treatment system. Testing was also conducted on the caustic neutralization process of used cleaning solution to ensure that optimal pH for disposal was obtained as quickly as possible without generating excessive heat. After the initial application of 15 v/v% solution of the cleaning composition to the plant evaporator, all subsequent cleanings used the on-site disposal water treatment system for disposal of the used, neutralized cleaning composition. This resulted in an easier cleaning procedure and savings in waste disposal costs.

### Example 23: Dissolution of pigging deposit from once-through steam generator (OTSG)

The test method consisted of weighing several grams (~3 g) of a OTSG pigging deposit solid into a 4 oz. plastic jar. Followed by the addition of 100 mL of distilled water. The test acid was prepared as a 15 wt. % of Composition A in distilled water. The cap to the jar was attached and the jar was shaken vigorously several times to completely wet the solid. If necessary, the cap was loosened to vent the build-up of pressure. The jars were stored in a circulating water bath heated to 75°C with an integral shaker. Periodically, samples (3 mL) were taken at least one hour after shaking. The samples (2 g) were then syringe filtered through a 0.45 µ filter, dried, and the percent dissolution was calculated.

| **Composition** | **Hours** | **Dissolution (%)** |
|---|---|---|
| Water | 5 | 10 |
| A | 5 | 30 |
| A | 70.9 | 31 |

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above compositions and methods without departing from the scope of the invention, it is intended that all matter contained in the above description and shown in the accompanying drawings shall be interpreted as illustrative and not in a limiting sense.

## Claims

1. A method for increasing recovery of crude oil from a subterranean hydrocarbon-containing formation, the method comprising:
injecting an acid composition comprising a salt of a nitrogen base having a fluoro-inorganic anion into a well which is in contact with the subterranean hydrocarbon-containing formation, wherein the nitrogen base comprises urea.

2. The method of claim 1, wherein the acid composition is diverted toward a zone of the subterranean hydrocarbon-containing formation that has a lower permeability to fluid than an adjacent zone.

3. The method of claim 1 or 2, wherein the subterranean hydrocarbon-containing formation comprises a sandstone reservoir or a carbonate reservoir, preferably wherein the subterranean hydrocarbon-containing formation comprises a carbonate reservoir.

4. The method of any one of claims 1 to 3, wherein the fluoro-inorganic anion is a borate or a phosphate anion, preferably wherein the fluoro-inorganic anion is tetrafluoroborate, hexafluorophosphate, or a combination thereof, further preferably wherein the fluoro-inorganic anion comprises tetrafluoroborate.

5. The method of any one of claims 1 to 4, wherein the nitrogen base is urea.

6. The method of any one of claims 1 to 5, wherein the fluoro-inorganic anion comprises tetrafluoroborate and the nitrogen base comprises urea and the molar ratio of urea to tetrafluroboric acid used to prepare the salt is 1:3 to 3:1.

7. The method of any one of claims 1 to 6, wherein the acid composition further comprises water.

8. The method of any one of claims 1 to 7, wherein the concentration of the salt of a nitrogen base having a fluoro-inorganic anion in the acid composition is from about 5 wt.% to about 85 wt.% based on the total weight of the acid composition.

9. The method of any one of claims 1 to 8, wherein the acid composition further comprises a surfactant, preferably wherein the surfactant is a nonionic surfactant.

10. The method of any one of claims 1 to 9, wherein the acid composition further comprises a corrosion inhibitor, preferably wherein the corrosion inhibitor comprises a quaternary amine, a fatty acid, an imidazoline, an alkyl-substituted alkyl amines, a phosphate ester, a phosphonate, a silicate, a phosphate, or a heavy metal, or a combination thereof.

11. The method of any one of claims 1 to 10, wherein the acid composition further comprises a chelating agent, preferably wherein the chelating agent is ethylene diamine tetraacetic acid (EDTA), 1-hydroxy ethylidene-1,1-diphosphonic acid (HEDP), ferrozine F, ferrozine B, or a combination thereof.

12. The method of any one of claims 1 to 11, wherein the acid composition removes an inorganic deposit.

13. The method of any one of claims 1 to 12, wherein the acid composition further comprises sodium chlorite, sodium chlorate, or an additional acid.

14. The method of any one of claims 1 to 13 wherein the method inhibits silica or silicate deposition.

15. The method of any one of claims 1 to 14 wherein the concentration of the acid composition is from about 5 wt.% to about 30 wt.% based on the total weight of the aqueous mixture injected.

## Patentansprüche

1. Verfahren zum Steigern einer Rohölgewinnung aus einer unterirdischen kohlenwasserstoffhaltigen Formation, das Verfahren umfassend:
Injizieren einer Säurezusammensetzung, umfassend ein Salz einer Stickstoffbase, die ein fluoranorganisches Anion aufweist, in ein Bohrloch, das mit der unterirdischen kohlenwasserstoffhaltigen Formation in Kontakt steht; wobei die Stickstoffbase Harnstoff umfasst.

2. Verfahren nach Anspruch 1, wobei die Säurezusammensetzung zu einer Zone der unterirdischen kohlenwasserstoffhaltigen Formation hin umgeleitet wird, die eine geringere Fluiddurchlässigkeit als eine angrenzende Zone aufweist.

3. Verfahren nach Anspruch 1 oder 2, wobei die unterirdische kohlenwasserstoffhaltige Formation ein Sandsteinreservoir oder ein Carbonatreservoir umfasst, vorzugsweise wobei die unterirdische kohlenwasserstoffhaltige Formation ein Carbonatreservoir umfasst.

4. Verfahren nach einem der Ansprüche 1 bis 3, wobei das fluoranorganische Anion ein Borat- oder ein Phosphatanion ist, vorzugsweise wobei das fluoranorganische Anion Tetrafluoroborat, Hexafluorophosphat oder eine Kombination davon ist, ferner vorzugsweise wobei das fluoranorganische Anion Tetrafluoroborat umfasst.

5. Verfahren nach einem der Ansprüche 1 bis 4, wobei die Stickstoffbase Harnstoff ist.

6. Verfahren nach einem der Ansprüche 1 bis 5, wobei das fluoranorganische Anion Tetrafluorborat umfasst, und die Stickstoffbase Harnstoff umfasst, und wobei das Molarverhältnis von Harnstoff zu Tetrafluorborsäure, die verwendet werden, um das Salz herzustellen, 1 : 3 bis 3 : 1 beträgt.

7. Verfahren nach einem der Ansprüche 1 bis 6, wobei die Säurezusammensetzung ferner Wasser umfasst.

8. Verfahren nach einem der Ansprüche 1 bis 7, wobei die Konzentration des Salzes einer Stickstoffbase, das ein fluoranorganisches Anion in der Säurezusammensetzung aufweist, von etwa 5 Gew.-% bis etwa 85 Gew.-%, basierend auf dem Gesamtgewicht der Säurezusammensetzung, beträgt.

9. Verfahren nach einem der Ansprüche 1 bis 8, wobei die Säurezusammensetzung ferner ein Tensid umfasst, vorzugsweise wobei das Tensid ein nichtionisches Tensid ist.

10. Verfahren nach einem der Ansprüche 1 bis 9, wobei die Säurezusammensetzung ferner einen Korrosionsinhibitor umfasst, vorzugsweise wobei der Korrosionsinhibitor ein quaternäres Amin, eine Fettsäure, ein Imidazolin, ein alkylsubstituiertes Alkylamin, einen Phosphatester, ein Phosphonat, ein Silicat, ein Phosphat oder ein Schwermetall oder eine Kombination davon umfasst.

11. Verfahren nach einem der Ansprüche 1 bis 10, wobei die Säurezusammensetzung ferner einen Chelatbildner umfasst, vorzugsweise wobei der Chelatbildner Ethylendiamintetraessigsäure (EDTA), 1-Hydroxyethyliden-1,1-diphosphonsäure (HEDP), Ferrozin F, Ferrozin B oder eine Kombination davon ist.

12. Verfahren nach einem der Ansprüche 1 bis 11, wobei die Säurezusammensetzung eine anorganische Ablagerung entfernt.

13. Verfahren nach einem der Ansprüche 1 bis 12, wobei die Säurezusammensetzung ferner Natriumchlorit, Natriumchlorat oder eine zusätzliche Säure umfasst.

14. Verfahren nach einem der Ansprüche 1 bis 13, wobei das Verfahren Siliciumdioxid- oder Silicatablagerung inhibiert.

15. Verfahren nach einem der Ansprüche 1 bis 14, wobei die Konzentration der Säurezusammensetzung von etwa 5 Gew.-% bis etwa 30 Gew.-%, basierend auf dem Gesamtgewicht der injizierten wässrigen Mischung, beträgt.

## Revendications

1. Procédé permettant d'augmenter la récupération de pétrole brut à partir d'une formation souterraine contenant des hydrocarbures, le procédé comprenant :
l'injection d'une composition acide comprenant un sel d'une base azotée ayant un anion fluoro-inorganique dans un puits qui est en contact avec la formation souterraine contenant des hydrocarbures ; dans lequel la base azotée comprend de l'urée.

2. Procédé selon la revendication 1, dans lequel la composition acide est détournée vers une zone de la formation souterraine contenant des hydrocarbures qui a une perméabilité aux fluides inférieure à celle d'une zone adjacente.

3. Procédé selon la revendication 1 ou 2, dans lequel la formation souterraine contenant des hydrocarbures comprend un réservoir de grès ou un réservoir de carbonate, de préférence dans lequel la formation souterraine contenant des hydrocarbures comprend un réservoir de carbonate.

4. Procédé selon l'une quelconque des revendications 1 à 3, dans lequel l'anion fluoro-inorganique est un anion borate ou un anion phosphate, de préférence dans lequel l'anion fluoro-inorganique est le tétrafluoroborate, l'hexafluorophosphate, ou une combinaison de ceux-ci, de préférence encore dans lequel l'anion fluoro-inorganique comprend le tétrafluoroborate.

5. Procédé selon l'une quelconque des revendications 1 à 4, dans lequel la base azotée est l'urée.

6. Procédé selon l'une quelconque des revendications 1 à 5, dans lequel l'anion fluoro-inorganique comprend du tétrafluoroborate et la base azotée comprend de l'urée et le rapport molaire de l'urée et à l'acide tétrafluroborique utilisé pour préparer le sel est de 1:3 à 3:1.

7. Procédé selon l'une quelconque des revendications 1 à 6, dans lequel la composition acide comprend en outre de l'eau.

8. Procédé selon l'une quelconque des revendications 1 à 7, dans lequel la concentration du sel d'une base azotée ayant un anion fluoro-inorganique dans la composition acide va d'environ 5 % en poids à environ 85 % en poids sur la base du poids total de la composition acide.

9. Procédé selon l'une quelconque des revendications 1 à 8, dans lequel la composition acide comprend en outre un agent tensioactif, de préférence dans lequel l'agent tensioactif est un agent tensioactif non ionique.

10. Procédé selon l'une quelconque des revendications 1 à 9, dans lequel la composition acide comprend en outre un inhibiteur de corrosion, de préférence dans lequel l'inhibiteur de corrosion comprend une amine quaternaire, un acide gras, une imidazoline, une alkylamine à substitution alkyle, un ester de phosphate, un phosphonate, un silicate, un phosphate, ou un métal lourd, ou une combinaison de ceux-ci.

11. Procédé selon l'une quelconque des revendications 1 à 10, dans lequel la composition acide comprend en outre un agent chélateur, de préférence dans lequel l'agent chélateur est l'acide éthylène diamine tétraacétique (EDTA), l'acide 1-hydroxy-éthylidène-1,1-diphosphonique (HEDP), la ferrozine F, la ferrozine B, ou une combinaison de ceux-ci.

12. Procédé selon l'une quelconque des revendications 1 à 11, dans lequel la composition acide retire un dépôt inorganique.

13. Procédé selon l'une quelconque des revendications 1 à 12, dans lequel la composition acide comprend en outre du chlorite de sodium, du chlorate de sodium, ou un acide supplémentaire.

14. Procédé selon l'une quelconque des revendications 1 à 13, dans lequel le procédé inhibe un dépôt de silice ou de silicate.

15. Procédé selon l'une quelconque des revendications 1 à 14, dans lequel la concentration de la composition acide va d'environ 5 % en poids à environ 30 % en poids sur la base du poids total du mélange aqueux injecté.
